# EUROPÄISCHE PATENTSCHRIFT

(11) **EP 3 500 402 B1**
(45) Veröffentlichungstag und Bekanntmachung des Hinweises auf die Patenterteilung: **28.07.2021**
(21) Anmeldenummer: 17758477.8
(22) Anmeldetag: 18.08.2017
(51) Int. Cl.: B24B 45/00, B27B 5/32, B24B 23/02

(54) **SCHNELLSPANNVORRICHTUNG FÜR EINE TRAGBARE WERKZEUGMASCHINE, INSBESONDERE FÜR EINE WINKELSCHLEIFMASCHINE**
QUICK TENSIONING DEVICE FOR A PORTABLE MACHINE TOOL, IN PARTICULAR FOR AN ANGLE GRINDING MACHINE
DISPOSITIF DE SERRAGE RAPIDE POUR UNE MACHINE-OUTIL PORTATIVE, EN PARTICULIER POUR UNE MEULEUSE D'ANGLE

(30) Priorität: 22.08.2016 DE 102016215691; 22.08.2016 DE 102016215702; 31.01.2017 DE 102017201509; 31.01.2017 DE 102017201501; 07.08.2017 DE 202017104815 U; 07.08.2017 DE 102017213668; 07.08.2017 DE 102017213669; 07.08.2017 DE 202017104816 U; 11.08.2017 DE 102017214119
(43) Veröffentlichungstag der Anmeldung: 26.06.2019
(73) Patentinhaber: Robert Bosch GmbH, 70442 Stuttgart (DE)
(72) Erfinder: LUESCHER, Bruno, 4800 Zofingen (CH); ZURBRUEGG, Andreas, 4573 Lohn-Ammansegg (CH); SINZIG, Bruno, 4538 Oberbipp (CH); SCHULLER, Marcus, 72135 Dettenhausen (DE)
(86) Internationale Anmeldenummer: PCT/EP2017/070920
(87) Internationale Veröffentlichungsnummer: WO 2018/036920

(56) Entgegenhaltungen:
- WO-A1-2015/014468
- WO-A1-2015/014469
- WO-A2-03/103897
- WO-A2-2013/131676

## Beschreibung

### Stand der Technik

Es sind bereits Schnellspannvorrichtungen für tragbare Werkzeugmaschinen bekannt, die eine Abtriebswelle, eine zumindest teilweise in der Abtriebswelle angeordnete Spanneinheit, die zu einer werkzeuglosen Fixierung einer Einsatzwerkzeugeinheit an der Abtriebswelle zumindest ein zumindest um und/oder entlang einer Bewegungsachse der Spanneinheit beweglich gelagertes Spannelement aufweist, und eine Drehmomentübertragungseinheit zu einer Übertragung eines Drehmoments auf die Einsatzwerkzeugeinheit in einem an der Abtriebswelle angeordneten Zustand der Einsatzwerkzeugeinheit, die zumindest ein Drehmomentübertragungselement aufweist, umfassen, siehe z.B. WO- A 2013/131676.

### Offenbarung der Erfindung

Die Erfindung geht aus von einer Schnellspannvorrichtung für eine tragbare Werkzeugmaschine, insbesondere für eine Winkelschleifmaschine, mit zumindest einer, insbesondere rotierend antreibbaren, Abtriebswelle, mit zumindest einer zumindest teilweise in der Abtriebswelle angeordneten Spanneinheit, die zu einer werkzeuglosen Fixierung einer Einsatzwerkzeugeinheit an der Abtriebswelle zumindest ein zumindest um und/oder entlang einer Bewegungsachse der Spanneinheit beweglich gelagertes Spannelement aufweist, und mit zumindest einer Drehmomentübertragungseinheit zu einer Übertragung eines Drehmoments auf die Einsatzwerkzeugeinheit in einem an der Abtriebswelle angeordneten Zustand der Einsatzwerkzeugeinheit, die zumindest ein, insbesondere separat zur Abtriebswelle ausgebildetes, Drehmomentübertragungselement aufweist.

Es wird vorgeschlagen, dass die Schnellspannvorrichtung zumindest eine Befestigungseinheit zumindest zu einer, insbesondere drehfesten, Befestigung des Drehmomentübertragungselements an der Abtriebswelle umfasst. Das Drehmomentübertragungselement greift vorzugsweise in einem an der Spanneinheit und/oder der Abtriebswelle angeordneten Zustand der Einsatzwerkzeugeinheit in eine Aufnahmeausnehmung der Einsatzwerkzeugeinheit ein und liegt zu einer Drehmomentübertragung an zumindest einem die Aufnahmeausnehmung begrenzenden Rand der Einsatzwerkzeugeinheit an. Eine Drehmomentübertragung zwischen der Abtriebswelle und der an der Spanneinheit und/oder der Abtriebswelle angeordneten Einsatzwerkzeugeinheit erfolgt vorzugsweise auf eine, einem Fachmann bereits bekannte Art und Weise mittels einer formschlüssigen Verbindung zwischen dem Drehmomentübertragungselement und der Einsatzwerkzeugeinheit in einem an der Abtriebswelle angeordneten Zustand der Einsatzwerkzeugeinheit. Das Drehmomentübertragungselement ist vorzugsweise drehfest an der Abtriebswelle angeordnet. Das Drehmomentübertragungselement ist zusammen mit der Abtriebswelle rotierend um eine Rotationsachse der Abtriebswelle antreibbar. Vorzugsweise verläuft die Rotationsachse der Abtriebswelle zumindest im Wesentlichen senkrecht zur Bewegungsachse der Spanneinheit. Alternativ ist es jedoch auch denkbar, dass die Rotationsachse der Abtriebswelle zumindest im Wesentlichen parallel zur Bewegungsachse der Spanneinheit verläuft. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter "beweglich gelagert" soll insbesondere eine Lagerung eines Elements und/oder einer Einheit verstanden werden, wobei das Element und/oder die Einheit eine Bewegungsmöglichkeit, insbesondere entkoppelt von einer elastischen Verformung des Elements und/oder der Einheit, entlang einer Bewegungsachse von mehr als 5 mm, bevorzugt von mehr als 10 mm und besonders bevorzugt von mehr als 50 mm und/oder um eine Bewegungsachse entlang eines Winkelbereichs von mehr als 1°, bevorzugt von mehr als 5° und besonders bevorzugt von mehr als 15° aufweisen/aufweist.

Vorzugsweise ist das Spannelement zumindest teilweise in der Abtriebswelle angeordnet. Bevorzugt umgibt die Abtriebswelle entlang einer Umfangsrichtung der Abtriebswelle, die um eine Rotationsachse der Abtriebswelle verläuft, das Spannelement zumindest teilweise, insbesondere vollständig. Die Umfangsrichtung der Abtriebswelle verläuft vorzugsweise in einer sich zumindest im Wesentlichen senkrecht zur Rotationsachse der Abtriebswelle erstreckenden Ebene. Vorzugsweise ist das Spannelement drehfest mit der Abtriebswelle verbunden. Bevorzugt ist das Spannelement zusammen mit der Abtriebswelle um die Rotationsachse beweglich, insbesondere drehbar, gelagert. Die Rotationsachse der Abtriebswelle verläuft vorzugsweise zumindest im Wesentlichen parallel, insbesondere koaxial, zu zumindest einer Bewegungsachse der Spanneinheit. Bevorzugt ist das Spannelement schwenkbar um eine Schwenkachse des Spannelements gelagert. Vorzugsweise verläuft die Schwenkachse des Spannelements quer, insbesondere zumindest im Wesentlichen senkrecht, zur Rotationsachse der Abtriebswelle. Bevorzugt verläuft die Schwenkachse des Spannelements zumindest im Wesentlichen senkrecht zu einer Spannachse der Spanneinheit. Die Schwenkachse des Spannelements bildet bevorzugt zumindest eine Bewegungsachse der Spanneinheit. Die Schwenkachse des Spannelements verläuft vorzugsweise zumindest im Wesentlichen senkrecht zu einer Spannachse der Spanneinheit. Unter einer "Spannachse" soll hier insbesondere eine Achse der Spanneinheit verstanden werden, entlang derer eine axiale Sicherungskraft der Spanneinheit auf die Einsatzwerkzeugeinheit zu einer Fixierung der Einsatzwerkzeugeinheit an der Abtriebswelle ausübbar ist und/oder entlang derer ein Übertragungselement der Spanneinheit zu einer Bewegung des Spannelements beweglich gelagert ist. Die Spannachse bildet bevorzugt zumindest eine weitere Bewegungsachse der Spanneinheit. Bevorzugt ist das Spannelement als Spannbacke ausgebildet. Vorzugsweise ist das Spannelement dazu vorgesehen, die Einsatzwerkzeugeinheit axial an der Abtriebswelle zu sichern. Bevorzugt greift das Spannelement zumindest in der Spannposition zumindest teilweise in die Einsatzwerkzeugeinheit ein, insbesondere in eine Fixierungsausnehmung der Einsatzwerkzeugeinheit. Bevorzugt hintergreift das Spannelement zumindest in einem mittels der Spanneinheit fixierten Zustand der Einsatzwerkzeugeinheit einen Spannfortsatz der Einsatzwerkzeugeinheit. Unter "vorgesehen" soll insbesondere speziell programmiert, ausgelegt und/oder ausgestattet verstanden werden. Darunter, dass ein Element und/oder eine Einheit zu einer bestimmten Funktion vorgesehen ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt.

Vorzugsweise ist das Spannelement mittels einer mechanischen Verbindung zwischen zumindest dem Bedienelement der Bedieneinheit und dem Spannelement mittels der Bedieneinheit in die Spannposition und/oder in die Löseposition bewegbar. Vorzugsweise ist das Bedienelement als Bedienhebel, insbesondere als schwenkbar gelagerter Bedienhebel, ausgebildet. Es ist jedoch auch denkbar, dass mittels eines Bedienelements der Bedieneinheit ein elektrisches Signal erzeugbar ist, mittels dessen ein Aktor ansteuerbar ist, der dazu vorgesehen ist, das Spannelement in die Spannposition und/oder in die Löseposition zu bewegen. Die Bedieneinheit kann als mechanische, als elektrische und/oder als elektronische Bedieneinheit ausgebildet sein, die dazu vorgesehen ist, infolge eines Bedienbefehls eines Bedieners und/oder einer Bedienerkraft eines Bedieners das Spannelement in die Spannposition und/oder in die Löseposition zu bewegen.

Bevorzugt umfasst die Spanneinheit zumindest zwei beweglich, insbesondere schwenkbar, gelagerte Spannelemente. Es ist jedoch auch denkbar, dass die Spanneinheit eine von zwei abweichende Anzahl an Spannelementen umfasst. Bevorzugt weisen die zumindest zwei Spannelemente eine zumindest im Wesentlichen analoge Ausgestaltung auf. Vorzugsweise sind die zumindest zwei Spannelemente der Spanneinheit relativ zueinander beweglich, insbesondere relativ zueinander schwenkbar, gelagert. Insbesondere sind die zumindest zwei Spannelemente mittels der Bedieneinheit in eine Spannposition der Spannelemente und/oder in eine Löseposition der Spannelemente bewegbar. Bevorzugt sind die zumindest zwei Spannelemente mittels der Bedieneinheit gemeinsam bewegbar, insbesondere gemeinsam in die Spannposition und/oder in die Löseposition bewegbar. Es ist jedoch auch denkbar, dass die zumindest zwei Spannelemente mittels der Bedieneinheit unabhängig voneinander in die Spannposition und/oder in die Löseposition bewegbar sind. Die zumindest zwei Spannelemente sind vorzugsweise jeweils um die Spannachse beweglich, insbesondere schwenkbar, gelagert.

Vorzugsweise umfasst die Schnellspannvorrichtung zumindest eine Sicherungseinheit, insbesondere eine Selbsthemmungseinheit und/oder eine Rasteinheit, die dazu vorgesehen ist, zumindest bei einer Einwirkung einer von der Bedieneinheit entkoppelten und in Richtung der Löseposition des Spannelements wirkenden Kraft auf das Spannelement eine Bewegung des Spannelements ausgehend von der Spannposition in die Löseposition des Spannelements, insbesondere bis auf toleranz- und/oder spielbedingte Bewegungen des Spannelements, zu unterbinden. Bevorzugt ist die Sicherungseinheit, insbesondere die Selbsthemmungseinheit und/oder die Rasteinheit, dazu vorgesehen, zumindest bei einer Einwirkung einer von der Bedieneinheit entkoppelten und in Richtung der Löseposition des Spannelements wirkenden Kraft auf das Spannelement das Spannelement ausgehend von der Spannposition weitestgehend gegen eine Bewegung in die Löseposition des Spannelements zu sichern. Unter dem Ausdruck "weitestgehend gegen eine Bewegung zu sichern" soll insbesondere eine Sicherung eines Elements, insbesondere in einer Position des Elements, gegen eine Bewegung verstanden werden, wobei eine toleranz- und/oder spielbedingte Bewegung des Elements in einer gesicherten Position des Elements erfolgen kann. Vorzugsweise ist das Spannelement durch die Sicherungseinheit in der Spannposition mittels einer form- und/oder kraftschlüssigen Verbindung in der Spannposition gegen eine Bewegung in die Löseposition des Spannelements sicherbar. Vorzugsweise ist die Sicherungseinheit zumindest dazu vorgesehen, eine Schwenkbewegung des Spannelements ausgehend von der Spannposition des Spannelements zumindest weitestgehend, insbesondere bis auf eine toleranz- und/oder spielbedingte Schwenkbewegung, gegen eine Schwenkbewegung des Spannelements in die Löseposition zu unterbinden. Die Sicherungseinheit kann als magnetische Sicherungseinheit, als mechanische Sicherungseinheit, als elektronische Sicherungseinheit o. dgl. ausgebildet sein. Bei einer Ausgestaltung der Sicherungseinheit als magnetische Sicherungseinheit ist es denkbar, dass die Sicherungseinheit zumindest ein Magnetelement umfasst, das das Spannelement mittels einer Einwirkung einer Magnetkraft in der Spannposition sichert. Bei einer Ausgestaltung der Sicherungseinheit als mechanische Sicherungseinheit ist es denkbar, dass die Sicherungseinheit zumindest ein mechanisches Sicherungselement umfasst, das das Spannelement mittels einer form- und/oder kraftschlüssigen Verbindung in der Spannposition sichert. Bei einer Ausgestaltung der Sicherungseinheit als elektronische Sicherungseinheit ist es denkbar, dass die Sicherungseinheit zumindest ein elektronisches Element umfasst, das das Spannelement in der Spannposition sichert und/oder das eine Position des Spannelements überwacht und bei einem Erreichen der Spannposition einen Aktor ansteuert, der das Spannelement in der Spannposition sichert. Weitere, einem Fachmann als sinnvoll erscheinende Ausgestaltungen der Sicherungseinheit sind ebenfalls denkbar.

Vorzugsweise ist die Befestigungseinheit dazu vorgesehen, das Drehmomentübertragungselement drehfest an der Abtriebswelle anzuordnen, insbesondere zu fixieren. Die Befestigungseinheit kann als kraft-, form- und/oder stoffschlüssige Verbindung ausgebildet sein. Beispielsweise kann die Befestigungseinheit als Bolzeneinheit, Nieteneinheit, als Schraubeinheit, als Formschlusseinheit, als Schweißverbindungseinheit, als Presspassverbindungseinheit, als Rasthakenverbindungseinheit und/oder als eine andere, einem Fachmann als sinnvoll erscheinende Einheit ausgebildet sein, die dazu vorgesehen ist, das Drehmomentübertragungselement an der Abtriebswelle zu fixieren, insbesondere drehfest zu fixieren. Bevorzugt ist zumindest ein Befestigungselement der Befestigungseinheit einteilig mit der Abtriebswelle ausgebildet. Es ist jedoch auch denkbar, dass die Befestigungseinheit eine Vielzahl an Befestigungselementen aufweist, die einteilig mit der Abtriebswelle ausgebildet sind. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Beispielsweise kann das Befestigungselement der Befestigungseinheit als Gewindeelement, als Bajonettverschlusselement, als Aufnahmeausnehmung, als Presspassungselement, als Abtriebswellendrehmomentfortsatz oder als ein anderes, einem Fachmann als sinnvoll erscheinendes Befestigungselement ausgebildet sein.

Mittels der erfindungsgemäßen Ausgestaltung kann vorteilhaft eine kompakte Ausgestaltung der Schnellspannvorrichtung erreicht werden. Es kann vorteilhaft eine sichere Übertragung eines Drehmoments auf die Einsatzwerkzeugeinheit in einem an der Abtriebswelle angeordneten Zustand der Einsatzwerkzeugeinheit erreicht werden.

Des Weiteren wird, insbesondere in zumindest einer Ausgestaltung der erfindungsgemäßen Schnellspannvorrichtung, vorgeschlagen, dass die Befestigungseinheit zumindest ein Befestigungselement aufweist, das dazu vorgesehen ist, das Drehmomentübertragungselement mittels einer form- und/oder kraftschlüssigen Verbindung an der Abtriebswelle zu befestigen. Das Befestigungselement kann beispielsweise als Stift, als Bolzen, als Fortsatz, als Gewinde oder als ein anderes, einem Fachmann als sinnvoll erscheinendes Element ausgebildet sein. Beispielsweise ist es denkbar, dass das Befestigungselement einteilig mit dem Drehmomentübertragungselement oder mit einem Abdeckelement einer Abdeckeinheit der Schnellspannvorrichtung ausgebildet ist, wobei das Befestigungselement als Axialfortsatz, als Ausnehmung, als Umfangsrandbereich des Abdeckelements o. dgl. ausgebildet ist. Denkbar ist, dass das Befestigungselement eine zumindest teilweise zu einer eine Aufnahmeausnehmung der Abtriebswelle begrenzende Innenkontur der Abtriebswelle korrespondierende Außengeometrie aufweist, insbesondere gemäß einem Schlüssel-Schlüsselloch-Prinzip. Alternativ oder zusätzlich ist es denkbar, dass das Befestigungselement als Axialfortsatz ausgebildet ist, der an dem Abdeckelement und/oder dem Drehmomentübertragungselement angeordnet ist und in eine an der Abtriebswelle angeordnete Aufnahmeausnehmung eingreift, insbesondere entlang einer zumindest im Wesentlichen parallel zu einer Rotationsachse der Abtriebswelle verlaufenden Richtung betrachtet. Ferner ist alternativ oder zusätzlich denkbar, dass das Befestigungselement als Presspassungselement ausgebildet ist, wie beispielsweise als Konus o. dgl., das an dem Abdeckelement und/oder dem Drehmomentübertragungselement angeordnet ist und in eine korrespondierende Aufnahmeausnehmung der Abtriebswelle einpressbar ist. Es ist jedoch auch denkbar, dass das Befestigungselement an der Abtriebswelle angeordnet ist und in eine Aufnahmeausnehmung des Abdeckelements und/oder des Drehmomentübertragungselements eingreift o. dgl. Weitere, einem Fachmann als sinnvoll erscheinende Ausgestaltung des Befestigungselements sind ebenfalls denkbar. Mittels der erfindungsgemäßen Ausgestaltung kann vorteilhaft eine konstruktiv einfache Ausgestaltung der Befestigungseinheit realisiert werden. Es kann vorteilhaft eine kompakte Ausgestaltung der Schnellspannvorrichtung erreicht werden. Es kann vorteilhaft eine sichere Übertragung eines Drehmoments auf die Einsatzwerkzeugeinheit in einem an der Abtriebswelle angeordneten Zustand der Einsatzwerkzeugeinheit erreicht werden.

Ferner wird, insbesondere in zumindest einer Ausgestaltung der erfindungsgemäßen Schnellspannvorrichtung, vorgeschlagen, dass das Befestigungselement dazu vorgesehen ist, zusätzlich zum Drehmomentübertagungselement zumindest das Spannelement an der Abtriebswelle zu befestigen, insbesondere drehfest mit der Abtriebswelle zu verbinden. Vorzugsweise ist das Spannelement infolge einer Befestigung mittels des Befestigungselements zusammen mit dem Drehmomentübertragungselement und der Abtriebswelle um die Rotationsachse der Abtriebswelle drehbar gelagert. Vorzugsweise ist das das Spannelement direkt mittels des Befestigungselements an der Abtriebswelle befestigt. In einer alternativen Ausgestaltung ist das Spannelement mittels des Befestigungselements am Drehmomentübertragungselement befestigt, das mittels zumindest eines weiteren Befestigungselements der Befestigungseinheit an der Abtriebswelle befestigt ist, insbesondere drehfest mit der Abtriebswelle verbunden ist. Bevorzugt ist das Befestigungselement dazu vorgesehen, zusätzlich zum Drehmomentübertagungselement zumindest zwei, insbesondere schwenkbar gelagerte, Spannelemente der Spanneinheit an der Abtriebswelle zu befestigen, insbesondere drehfest mit der Abtriebswelle zu verbinden. Es ist jedoch auch denkbar, dass das Befestigungselement dazu vorgesehen ist, eine von zwei abweichende Anzahl an, insbesondere schwenkbar gelagerte, Spannelemente der Spanneinheit an der Abtriebswelle zu befestigen. Mittels der erfindungsgemäßen Ausgestaltung kann vorteilhaft eine Einsparung von zusätzlichen Bauteilen zu einer Befestigung des Spannelements ermöglicht werden. Es kann vorteilhaft eine konstruktiv einfache Ausgestaltung der Befestigungseinheit realisiert werden. Es kann vorteilhaft eine kompakte Ausgestaltung der Schnellspannvorrichtung erreicht werden. Es kann vorteilhaft eine sichere Übertragung eines Drehmoments auf die Einsatzwerkzeugeinheit in einem an der Abtriebswelle angeordneten Zustand der Einsatzwerkzeugeinheit erreicht werden.

Zudem wird, insbesondere in zumindest einer Ausgestaltung der erfindungsgemäßen Schnellspannvorrichtung, vorgeschlagen, dass das Befestigungselement als Bolzen ausgebildet ist, der in einem Befestigungszustand eine quer, insbesondere zumindest im Wesentlichen senkrecht, zu einer Bewegungsachse der Abtriebswelle verlaufende Längsachse aufweist. Vorzugsweise ist das Befestigungselement als Lagerbolzen ausgebildet, der dazu vorgesehen ist, zumindest das Spannelement relativ zur Abtriebswelle beweglich zu lagern. Bevorzugt bildet die Längsachse des Befestigungselements eine Haupterstreckungsachse des Befestigungselements, die quer, insbesondere zumindest im Wesentlichen senkrecht, zur Rotationsachse der Abtriebswelle, insbesondere in einem an der Abtriebswelle angeordneten Zustand des Befestigungselements, verläuft. Vorzugsweise definiert das Befestigungselement die Schwenkachse des Spannelements. Bevorzugt sind zumindest zwei Spannelemente der Spanneinheit mittels des Befestigungselements schwenkbar an der Abtriebswelle gelagert. Mittels der erfindungsgemäßen Ausgestaltung kann vorteilhaft eine kompakte Ausgestaltung der Schnellspannvorrichtung erreicht werden. Es kann vorteilhaft eine sichere Übertragung eines Drehmoments auf die Einsatzwerkzeugeinheit in einem an der Abtriebswelle angeordneten Zustand der Einsatzwerkzeugeinheit erreicht werden.

Des Weiteren wird, insbesondere in zumindest einer Ausgestaltung der erfindungsgemäßen Schnellspannvorrichtung, vorgeschlagen, dass die Befestigungseinheit zumindest eine Formschlusskontur aufweist, die zumindest zu einer Befestigung des Drehmomentübertragungselements dazu vorgesehen ist, mit zumindest einer an der Abtriebswelle angeordneten Formschlussgegenkontur zusammenzuwirken. Bevorzugt ist die Formschlusskontur einteilig mit dem Drehmomentübertragungselement und/oder mit dem Abdeckelement, an dem das Drehmomentübertragungselement vorzugsweise angeordnet ist, ausgebildet. Vorzugsweise bildet die Formschlusskontur eine, insbesondere entlang der Umfangsrichtung der Abtriebswelle verlaufende, Außenkontur des Drehmomentübertragungselements und/oder des Abdeckelements, an dem das Drehmomentübertragungselement angeordnet ist. Die Formschlusskontur ist vorzugsweise polygonal, elliptisch, oval o. dgl. ausgebildet, insbesondere betrachtet in einer zumindest im Wesentlichen senkrecht zur Rotationsachse der Abtriebswelle verlaufenden Ebene. Alternativ oder zusätzlich erstreckt sich die Formschlusskontur entlang einer zumindest im Wesentlichen parallel zur Rotationsachse der Abtriebswelle verlaufenden Richtung, insbesondere in eine als Aufnahmeausnehmung ausgebildete und an der Abtriebswelle angeordnete Formschlussgegenkontur hinein. Bevorzugt ist infolge eines Zusammenwirkens der Formschlusskontur und der Formschlussgegenkontur ein Drehmoment von der Abtriebswelle auf das Drehmomentübertragungselement übertragbar. Es ist denkbar, dass die Befestigungseinheit eine Vielzahl an Formschlusskonturen aufweist, die entlang der Umfangsrichtung der Abtriebswelle gleichmäßig oder ungleichmäßig verteilt am Drehmomentübertragungselement angeordnet sind, wobei eine Anzahl an Formschlussgegenkonturen, die an der Abtriebswelle angeordnet sind, vorzugsweise abhängig ist von einer Anzahl an Formschlusskonturen, insbesondere gleichwertig ist. Mittels der erfindungsgemäßen Ausgestaltung kann vorteilhaft eine große Befestigungsfläche realisiert werden, die eine sicher Befestigung des Drehmomentübertragungselements an der Abtriebswelle ermöglicht. Es kann vorteilhaft eine sichere Übertragung eines Drehmoments auf die Einsatzwerkzeugeinheit in einem an der Abtriebswelle angeordneten Zustand der Einsatzwerkzeugeinheit erreicht werden.

Ferner wird, insbesondere in zumindest einer Ausgestaltung der erfindungsgemäßen Schnellspannvorrichtung, vorgeschlagen, dass die Befestigungseinheit zumindest ein Sicherungselement umfasst, das dazu vorgesehen ist, eine Verbindung des Drehmomentübertragungselements mittels des Befestigungselements zu sichern. Vorzugsweise ist das Sicherungselement verschieden von dem Befestigungselement ausgebildet. Das Sicherungselement ist vorzugsweise ein zum Befestigungselement separat ausgebildetes Element. Das Sicherungselement kann als Sicherungsbolzen, als Sicherungsschraube, als Sicherungsring, als Sicherungslack, als Sicherungsfortsatz o. dgl. ausgebildet sein. Mittels der erfindungsgemäßen Ausgestaltung kann vorteilhaft eine hohe Bedienersicherheit ermöglicht werden. Es kann vorzugsweise ein ungewolltes Lösen des Befestigungselements von der Abtriebswelle vermieden werden. Es kann vorteilhaft eine sichere Übertragung eines Drehmoments auf die Einsatzwerkzeugeinheit in einem an der Abtriebswelle angeordneten Zustand der Einsatzwerkzeugeinheit erreicht werden.

Zudem wird, insbesondere in zumindest einer Ausgestaltung der erfindungsgemäßen Schnellspannvorrichtung, vorgeschlagen, dass die Befestigungseinheit zumindest mehr als zwei Befestigungselemente aufweist, die dazu vorgesehen sind, das Drehmomentübertragungselement mittels einer form- und/oder kraftschlüssigen Verbindung an der Abtriebswelle zu befestigen. Vorzugsweise sind die Befestigungselemente entlang der Umfangsrichtung der Abtriebswelle gleichmäßig verteilt an der Abtriebswelle und/oder an dem Abdeckelement, an dem das Drehmomentübertragungselement angeordnet ist, angeordnet. Es ist jedoch auch denkbar, dass die Befestigungselemente entlang der Umfangsrichtung der Abtriebswelle ungleichmäßig an der Abtriebswelle und/oder an dem Abdeckelement, an dem das Drehmomentübertragungselement angeordnet ist, angeordnet sind. Mittels der erfindungsgemäßen Ausgestaltung kann vorteilhaft eine sichere Befestigung des Drehmomentübertragungselements an der Abtriebswelle erreicht werden. Es kann vorteilhaft eine geringe Einzelbelastung der einzelnen Befestigungselemente zu einer Drehmomentübertragung realisiert werden. Es kann vorteilhaft eine besonders belastbare Verbindung zwischen dem Drehmomentübertragungselement und der Abtriebswelle realisiert werden. Es kann vorteilhaft eine sichere Übertragung eines Drehmoments auf die Einsatzwerkzeugeinheit in einem an der Abtriebswelle angeordneten Zustand der Einsatzwerkzeugeinheit erreicht werden.

Des Weiteren wird, insbesondere in zumindest einer Ausgestaltung der erfindungsgemäßen Schnellspannvorrichtung, vorgeschlagen, dass das Befestigungselement als Nietelement ausgebildet ist. Vorzugsweise erstreckt sich das als Nietelement ausgebildete Befestigungselement zu einer Befestigung des Drehmomentübertragungselements an der Abtriebswelle durch das Drehmomentübertragungselement und/oder durch das Abdeckelement, an dem das Drehmomentübertragungselement angeordnet ist, sowie durch zumindest einen Teilbereich der Abtriebswelle. Es ist auch denkbar, dass das als Nietelement ausgebildete Befestigungselement zumindest teilweise einteilig mit der Abtriebswelle ausgebildet ist und sich durch das Drehmomentübertragungselement und/oder durch das Abdeckelement, an dem das Drehmomentübertragungselement angeordnet ist, hindurch erstreckt, oder dass das als Nietelement ausgebildete Befestigungselement zumindest teilweise einteilig mit dem Drehmomentübertragungselement und/oder mit dem Abdeckelement, an dem das Drehmomentübertragungselement angeordnet ist, ausgebildet ist und sich zumindest durch einen Teilbereich der Abtriebswelle hindurch erstreckt. Mittels der erfindungsgemäßen Ausgestaltung kann vorteilhaft eine kostengünstige Ausgestaltung der Befestigungseinheit realisiert werden. Es kann vorteilhaft eine sichere Übertragung eines Drehmoments auf die Einsatzwerkzeugeinheit in einem an der Abtriebswelle angeordneten Zustand der Einsatzwerkzeugeinheit erreicht werden.

Ferner wird, insbesondere in zumindest einer Ausgestaltung der erfindungsgemäßen Schnellspannvorrichtung, vorgeschlagen, dass die Befestigungseinheit das Drehmomentübertragungselement stoffschlüssig an der Abtriebswelle befestigt, insbesondere mittels einer Schweißverbindung der Befestigungseinheit. Mittels der erfindungsgemäßen Ausgestaltung kann vorteilhaft eine konstruktiv einfache Ausgestaltung der Befestigungseinheit realisiert werden. Es kann vorteilhaft eine kostengünstige Ausgestaltung der Befestigungseinheit realisiert werden. Es kann vorteilhaft eine sichere Übertragung eines Drehmoments auf die Einsatzwerkzeugeinheit in einem an der Abtriebswelle angeordneten Zustand der Einsatzwerkzeugeinheit erreicht werden.

Zudem wird vorgeschlagen, dass die Befestigungseinheit als Gewindeeinheit ausgebildet ist, und zumindest ein an dem Drehmomentübertragungselement angeordnetes Gewindeelement und zumindest ein an der Abtriebswelle angeordnetes weiteres Gewindeelement aufweist. Vorzugsweise ist das an dem Drehmomentübertragungselement angeordnete Gewindeelement als Innengewinde ausgebildet. Bevorzugt ist das an der Abtriebswelle angeordnete weitere Gewindeelement als Außengewinde ausgebildet. Es ist jedoch auch denkbar, dass das an dem Drehmomentübertragungselement angeordnete Gewindeelement als Außengewinde ausgebildet und dass das an der Abtriebswelle angeordnete weitere Gewindeelement als Innengewinde ausgebildet ist. Mittels der erfindungsgemäßen Ausgestaltung kann vorteilhaft eine konstruktiv einfache Ausgestaltung der Befestigungseinheit realisiert werden. Es kann vorteilhaft eine kostengünstige Ausgestaltung der Befestigungseinheit realisiert werden. Es kann vorteilhaft eine sichere Übertragung eines Drehmoments auf die Einsatzwerkzeugeinheit in einem an der Abtriebswelle angeordneten Zustand der Einsatzwerkzeugeinheit erreicht werden.

Des Weiteren wird vorgeschlagen, dass die Schnellspannvorrichtung zumindest eine Abdeckeinheit zu einem zumindest teilweisen Abdecken einer Öffnung der Abtriebswelle, aus der die Spanneinheit zumindest teilweise aus der Abtriebswelle heraus ragt, umfasst, wobei das Drehmomentübertragungselement an zumindest einem Abdeckelement der Abdeckeinheit befestigt ist, insbesondere einteilig mit dem Abdeckelement ausgebildet ist. Mittels der erfindungsgemäßen Ausgestaltung kann vorteilhaft eine kompakte Ausgestaltung der erfindungsgemäßen Schnellspannvorrichtung realisiert werden. Es kann vorteilhaft einem Eindringen von Schmutz in die Abtriebswelle entgegengewirkt werden.

Ferner wird eine tragbare Werkzeugmaschine, insbesondere eine Winkelschleifmaschine, mit zumindest einer erfindungsgemäßen Schnellspannvorrichtung vorgeschlagen. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Besonders bevorzugt ist die tragbare Werkzeugmaschine als Winkelschleifmaschine ausgebildet. Es ist jedoch auch denkbar, dass die tragbare Werkzeugmaschine eine andere, einem Fachmann als sinnvoll erscheinende Ausgestaltung aufweist, wie beispielsweise eine Ausgestaltung als Multifunktionswerkzeugmaschine mit einer oszillierend antreibbaren Abtriebswelle, als Kettensäge, als Kappsäge, als Gehrungssäge, als Gartengerät o. dgl. Mittels der erfindungsgemäßen Ausgestaltung kann vorteilhaft eine kompakte Ausgestaltung der tragbaren Werkzeugmaschine erreicht werden. Es kann vorteilhaft eine sichere Übertragung eines Drehmoments auf die Einsatzwerkzeugeinheit in einem an der Abtriebswelle angeordneten Zustand der Einsatzwerkzeugeinheit erreicht werden.

Die erfindungsgemäße Schnellspannvorrichtung und/oder die erfindungsgemäße tragbare Werkzeugmaschine sollen/soll hierbei nicht auf die oben beschriebene Anwendung und Ausführungsform beschränkt sein. Insbesondere können/kann die erfindungsgemäße Schnellspannvorrichtung und/oder die erfindungsgemäße tragbare Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße tragbare Werkzeugmaschine, insbesondere eine Winkelschleifmaschine, mit zumindest einer erfindungsgemäßen Schnellspannvorrichtung in einer schematischen Darstellung,
- Fig. 2: eine Teilschnittansicht der erfindungsgemäßen Schnellspannvorrichtung mit einer Befestigungseinheit der erfindungsgemäßen Schnellspannvorrichtung in einer schematischen Darstellung,
- Fig. 3a: eine Detailansicht einer Dichtungseinheit der erfindungsgemäßen Schnellspannvorrichtung in einer schematischen Darstellung,
- Fig. 3b: eine Detailansicht einer alternativen Dichtungseinheit der erfindungsgemäßen Schnellspannvorrichtung in einer schematischen Darstellung,
- Fig. 3c: eine Detailansicht einer alternativen Dichtungseinheit der erfindungsgemäßen Schnellspannvorrichtung in einer schematischen Darstellung,
- Fig. 3d: eine Detailansicht einer alternativen Dichtungseinheit der erfindungsgemäßen Schnellspannvorrichtung in einer schematischen Darstellung,
- Fig. 3e: eine Detailansicht einer alternativen Dichtungseinheit der erfindungsgemäßen Schnellspannvorrichtung in einer schematischen Darstellung,
- Fig. 3f: eine Detailansicht einer alternativen Dichtungseinheit der erfindungsgemäßen Schnellspannvorrichtung in einer schematischen Darstellung,
- Fig. 3g: eine Detailansicht einer alternativen Dichtungseinheit der erfindungsgemäßen Schnellspannvorrichtung in einer schematischen Darstellung,
- Fig. 3h: eine Detailansicht einer alternativen Dichtungseinheit der erfindungsgemäßen Schnellspannvorrichtung in einer schematischen Darstellung,
- Fig. 4: eine Detailansicht einer alternativen Befestigungseinheit der erfindungsgemäßen Schnellspannvorrichtung in einer schematischen Darstellung,
- Fig. 5: eine Detailansicht einer alternativen Befestigungseinheit der erfindungsgemäßen Schnellspannvorrichtung in einer schematischen Darstellung,
- Fig. 6: eine Detailansicht einer alternativen Befestigungseinheit der erfindungsgemäßen Schnellspannvorrichtung in einer schematischen Darstellung,
- Fig. 7: eine Detailansicht einer alternativen Befestigungseinheit der erfindungsgemäßen Schnellspannvorrichtung in einer schematischen Darstellung,
- Fig. 8: eine Detailansicht einer alternativen Befestigungseinheit der erfindungsgemäßen Schnellspannvorrichtung in einer schematischen Darstellung,
- Fig. 9: eine Detailansicht einer alternativen Befestigungseinheit der erfindungsgemäßen Schnellspannvorrichtung in einer schematischen Darstellung,
- Fig. 10: eine Detailansicht einer alternativen Befestigungseinheit der erfindungsgemäßen Schnellspannvorrichtung in einer schematischen Darstellung,
- Fig. 11: eine Detailansicht einer alternativen Befestigungseinheit der erfindungsgemäßen Schnellspannvorrichtung in einer schematischen Darstellung,
- Fig. 12: eine Detailansicht einer alternativen Befestigungseinheit der erfindungsgemäßen Schnellspannvorrichtung in einer schematischen Darstellung,
- Fig. 13: eine Detailansicht einer alternativen Befestigungseinheit der erfindungsgemäßen Schnellspannvorrichtung in einer schematischen Darstellung und
- Fig. 14: eine Detailansicht einer alternativen Befestigungseinheit der erfindungsgemäßen Schnellspannvorrichtung in einer schematischen Darstellung.

### Beschreibung der Ausführungsbeispiele

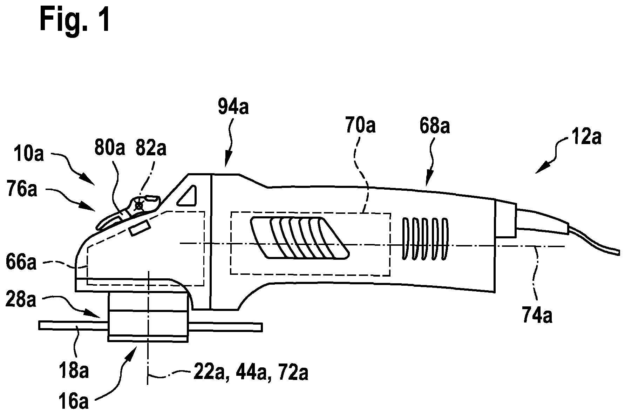

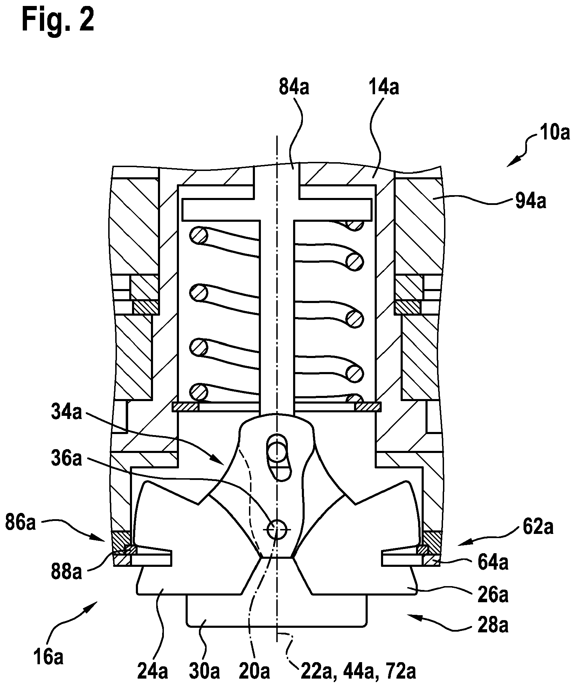

Figur 1 zeigt eine als Winkelschleifmaschine ausgebildete tragbare Werkzeugmaschine 12a mit einer Schnellspannvorrichtung 10a. Es ist jedoch auch denkbar, dass die tragbare Werkzeugmaschine 12a eine andere, einem Fachmann als sinnvoll erscheinende Ausgestaltung aufweist, wie beispielsweise eine Ausgestaltung als Kreissägemaschine, als Schleifmaschine o. dgl. Die tragbare Werkzeugmaschine 12a umfasst ein Getriebegehäuse 94a zu einer Aufnahme und/oder Lagerung einer Getriebeeinheit 66a der tragbaren Werkzeugmaschine 12a. Das Getriebegehäuse 94a ist vorzugsweise aus einem metallischen Werkstoff gebildet. Es ist jedoch auch denkbar, dass das Getriebegehäuse 94a aus einem anderen, einem Fachmann als sinnvoll erscheinenden Werkstoff gebildet ist, wie beispielsweise aus Kunststoff o. dgl. Die Getriebeeinheit 66a ist vorzugsweise als Winkelgetriebe ausgebildet. Die Getriebeeinheit 66a umfasst insbesondere eine rotierend antreibbare Abtriebswelle 14a, an der eine Einsatzwerkzeugeinheit 18a fixierbar ist, insbesondere mittels der Schnellspannvorrichtung 10a. Die Abtriebswelle 14a ist vorzugsweise als Hohlspindel ausgebildet, in der die Schnellspannvorrichtung 10a zumindest teilweise angeordnet ist (vgl. Figur 2).

An dem Getriebegehäuse 94a ist auf eine, einem Fachmann bereits bekannte Art und Weise eine hier nicht näher dargestellte Schutzhaubeneinheit anordenbar. An dem Getriebegehäuse 94a ist auf eine, einem Fachmann bereits bekannte Art und Weise ein hier nicht näher dargestellter Zusatzhandgriff anordenbar. Die tragbare Werkzeugmaschine 12a umfasst ein Motorgehäuse 68a zu einer Aufnahme und/oder Lagerung einer Antriebseinheit 70a der tragbaren Werkzeugmaschine 12a. Die Antriebseinheit 70a ist vorzugsweise auf eine, einem Fachmann bereits bekannte Art und Weise dazu vorgesehen, mittels eines Zusammenwirkens mit der Getriebeeinheit 66a die Abtriebswelle 14a rotierend um eine Rotationsachse 72a der Abtriebswelle 14a anzutreiben. Die Rotationsachse 72a der Abtriebswelle 14a verläuft zumindest im Wesentlichen senkrecht zu einer Antriebsachse 74a der Antriebseinheit 70a. Die Antriebseinheit 70a ist vorzugsweise als Elektromotoreinheit ausgebildet. Es ist jedoch auch denkbar, dass die Antriebseinheit 70a eine andere, einem Fachmann als sinnvoll erscheinende Ausgestaltung aufweist, wie beispielsweise eine Ausgestaltung als Verbrennungsantriebseinheit, als Hybridantriebseinheit, als Pneumatikantriebseinheit o. dgl.

Figur 2 zeigt eine Teilschnittansicht der Schnellspannvorrichtung 10a mit einer Befestigungseinheit 34a der Schnellspannvorrichtung 10a. Die Schnellspannvorrichtung 10a für die tragbare Werkzeugmaschine 12a umfasst zumindest die, insbesondere rotierend antreibbare, Abtriebswelle 14a, zumindest eine zumindest teilweise in der Abtriebswelle 14a angeordneten Spanneinheit 16a, die zu einer werkzeuglosen Fixierung der Einsatzwerkzeugeinheit 18a an der Abtriebswelle 14a zumindest ein zumindest um und/oder entlang einer Bewegungsachse 20a, 22a der Spanneinheit 16a beweglich gelagertes Spannelement 24a, 26a aufweist, und zumindest eine Drehmomentübertragungseinheit 28a zu einer Übertragung eines Drehmoments auf die Einsatzwerkzeugeinheit 18a in einem an der Abtriebswelle 14a angeordneten Zustand der Einsatzwerkzeugeinheit 18a, die zumindest ein, insbesondere separat zur Abtriebswelle 14a ausgebildetes, Drehmomentübertragungselement 30a, 32a aufweist. Ferner umfasst die Schnellspannvorrichtung 10a zumindest eine Bedieneinheit 76a zu einer Bewegung des Spannelements 24a, 26a in eine Spannposition und/oder in eine Löseposition des Spannelements 24a, 26a, in der die Einsatzwerkzeugeinheit 18a von der Spanneinheit 16a und/oder der Abtriebswelle 14a abnehmbar ist (vgl. Figur 1). Die Spanneinheit 16a umfasst zumindest zwei beweglich gelagerte Spannelemente 24a, 26a. Es ist jedoch auch denkbar, dass die Spanneinheit 16a eine von zwei abweichende Anzahl an Spannelementen 24a, 26a umfasst. Die zumindest zwei Spannelemente 24a, 26a weisen eine zumindest im Wesentlichen analoge Ausgestaltung auf, so dass Merkmale, die zu einem der Spannelemente 24a, 26a offenbart werden, ebenso für das weitere Spannelement 24a, 26a als offenbart anzusehen sind. Die zumindest zwei Spannelemente 24a, 26a sind schwenkbar gelagert. Die Bewegungsachse 20a der Spanneinheit 16a bildet vorzugsweise eine Schwenkachse der zumindest zwei Spannelemente 24a, 26a. Die Schwenkachse verläuft zumindest im Wesentlichen senkrecht zur Rotationsachse 72a der Abtriebswelle 14a. Die zumindest zwei Spannelemente 24a, 26a sind dazu vorgesehen, die Einsatzwerkzeugeinheit 18a in einem an der Spanneinheit 16a und/oder der Abtriebswelle 14a angeordneten Zustand axial an der Abtriebswelle 14a zu fixieren, insbesondere in der Spannposition der zumindest zwei Spannelemente 24a, 26a (vgl. Figur 2). Die zumindest zwei Spannelemente 24a, 26a sind drehfest mit der Abtriebswelle 14a verbunden. Die zumindest zwei Spannelemente 24a, 26a sind zusammen mit der Abtriebswelle 14a rotierend um die Rotationsachse 72a der Abtriebswelle 14a antreibbar. Die Rotationsachse 72 der Abtriebswelle 14a verläuft vorzugsweise zumindest im Wesentlichen parallel, insbesondere koaxial, zu zumindest einer weiteren Bewegungsachse 22a der Spanneinheit 16a, entlang derer zumindest ein Betätigungselement 84a der Bedieneinheit 76a zu einer Einwirkung auf das Spannelement 24a, 26a, insbesondere die zumindest zwei Spannelemente 24a, 26a, beweglich gelagert ist.

Die Bedieneinheit 76a ist vorzugsweise dazu vorgesehen, das Spannelement 24a, 26a, insbesondere die zumindest zwei Spannelemente 24a ,26a, zumindest in die Löseposition zu bewegen, in der die Einsatzwerkzeugeinheit 18a von der Spanneinheit 16a und/oder der Abtriebswelle 14a abnehmbar ist. Alternativ oder zusätzlich ist es denkbar, dass die Bedieneinheit 76a dazu vorgesehen ist, das Spannelement 24a, 26a, insbesondere die zumindest zwei Spannelemente 24a, 26a, zumindest in die Spannposition zu bewegen, in der die Einsatzwerkzeugeinheit 18a mittels der Spanneinheit 16a an der Abtriebswelle 14a fixierbar ist. Die Bedieneinheit 76a umfasst vorzugweise zumindest ein Bedienelement 80a, das von einem Bediener betätigbar ist. Das Bedienelement 80a ist als Bedienhebel ausgebildet. Das Bedienelement 80a umfasst eine Bewegungsachse 82a, insbesondere eine Schwenkachse, die quer, insbesondere zumindest im Wesentlichen senkrecht, zur Rotationsachse 72a der Abtriebswelle 14a verläuft. Das Bedienelement 80a ist vorzugsweise um die Bewegungsachse 82a, insbesondere Schwenkachse, schwenkbar gelagert. Das Bedienelement 80a ist vorzugsweise von einer Drehbewegung der Abtriebswelle 14a entkoppelbar.

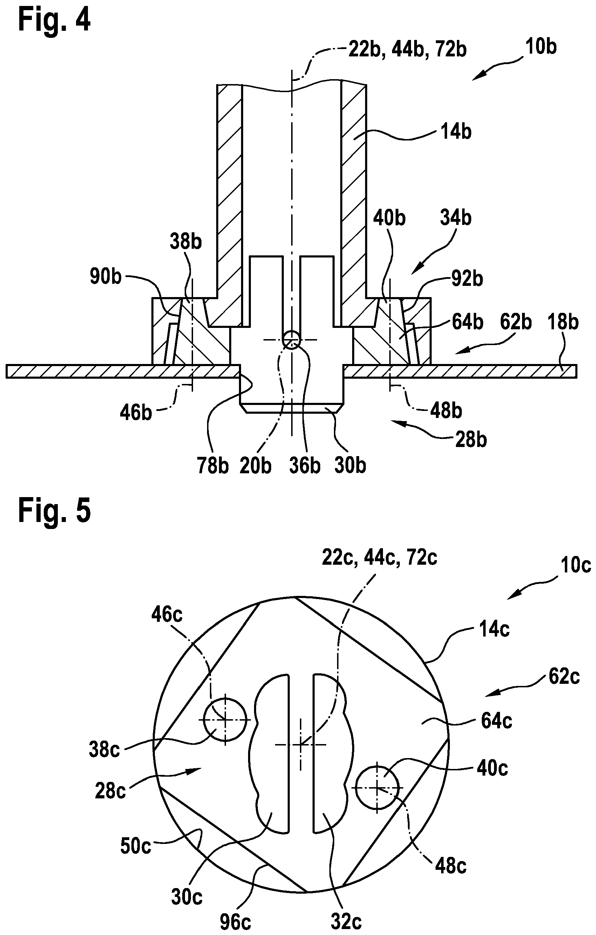

Die Drehmomentübertragungseinheit 28a umfasst zu einer Drehmomentübertragung auf die Einsatzwerkzeugeinheit 18a zumindest ein Drehmomentübertragungselement 30a. Die Drehmomentübertragungseinheit 28a umfasst zumindest zwei Drehmomentübertragungselemente 30a (in Figur 2 ist lediglich eines der zwei Drehmomentübertragungselemente 30a dargestellt, wobei die Drehmomentübertragungselemente 30a der in Figur 2 dargestellten Ausgestaltung der Drehmomentübertragungseinheit 28a vergleichbar mit der in beispielsweise Figur 5 dargestellten Ausgestaltung der Drehmomentübertragungseinheit 28c an der Abtriebswelle 14c angeordnet sein können). Es ist jedoch auch denkbar, dass die Drehmomentübertragungseinheit 28a eine von zwei abweichende Anzahl an Drehmomentübertragungselementen 30a umfasst. Die zumindest zwei Drehmomentübertragungselement 30a weisen eine zumindest im Wesentlichen analoge Ausgestaltung auf, so dass Merkmale, die zu einem der Drehmomentübertragungselemente 30a offenbart werden, ebenso für das weitere Drehmomentübertragungselement 30a als offenbart anzusehen sind. Das Drehmomentübertragungselement 30a greift in einem an der Spanneinheit 16a und/oder der Abtriebswelle 14a angeordneten Zustand der Einsatzwerkzeugeinheit 18a in eine Aufnahmeausnehmung der Einsatzwerkzeugeinheit 18a ein und liegt zu einer Drehmomentübertragung an zumindest einem die Aufnahmeausnehmung begrenzenden Rand der Einsatzwerkzeugeinheit 18a an. Eine Drehmomentübertragung zwischen der Abtriebswelle 14a und der an der Spanneinheit 16a und/oder der Abtriebswelle 14a angeordneten Einsatzwerkzeugeinheit 18a erfolgt vorzugsweise auf eine, einem Fachmann bereits bekannte Art und Weise mittels einer form- und/oder kraftschlüssigen Verbindung zwischen dem Drehmomentübertragungselement 30a und der Einsatzwerkzeugeinheit 18a. Das Drehmomentübertragungselement 30a ist drehfest an der Abtriebswelle 14a angeordnet. Das Drehmomentübertragungselement 30a ist zusammen mit der Abtriebswelle 14a rotierend um die Rotationsachse 72a der Abtriebswelle 14a antreibbar.

Vorzugsweise umfasst die Schnellspannvorrichtung 10a zumindest eine Befestigungseinheit 34a zumindest zu einer, insbesondere drehfesten, Befestigung des Drehmomentübertragungselements 30a an der Abtriebswelle 14a. Die Befestigungseinheit 34a weist zumindest ein Befestigungselement 36a auf, das dazu vorgesehen ist, das Drehmomentübertragungselement 30a, insbesondere die zumindest zwei Drehmomentübertragungselemente 30a, mittels einer form- und/oder kraftschlüssigen Verbindung an der Abtriebswelle 14a zu befestigen.

Die Schnellspannvorrichtung 10a umfasst vorzugsweise zumindest eine Abdeckeinheit 62a zu einem zumindest teilweisen Abdecken einer Öffnung der Abtriebswelle 14a, aus der die Spanneinheit 16a zumindest teilweise aus der Abtriebswelle 14a heraus ragt, wobei das Drehmomentübertragungselement 30a, insbesondere die zumindest zwei Drehmomentübertragungselemente 30a, an zumindest einem Abdeckelement 64a der Abdeckeinheit 62a befestigt ist/sind. Das Drehmomentübertragungselement 30a, insbesondere die zumindest zwei Drehmomentübertragungselemente 30a, ist/sind vorzugsweise einteilig mit dem Abdeckelement 64a ausgebildet. Das Befestigungselement 36a ist dazu vorgesehen, zusätzlich zum Drehmomentübertragungselement 30a zumindest das Spannelement 24a, 26a, insbesondere die zumindest zwei Spannelemente 24a, 26a, an der Abtriebswelle 14a zu befestigen. Das Befestigungselement 36a ist als Bolzen ausgebildet, der in einem Befestigungszustand eine quer, insbesondere zumindest im Wesentlichen senkrecht, zu einer Bewegungsachse 44a, insbesondere der Rotationsachse 72a, der Abtriebswelle 14a verlaufende Längsachse 46a aufweist. Die Längsachse 46a des Befestigungselements 36a definiert vorzugsweise die als Schwenkachse ausgebildete Bewegungsachse 20a der Spanneinheit 16a. Das Befestigungselements 36a bildet bevorzugt zumindest ein Lagerelement zu einer beweglichen Lagerung des Spannelements 24a, 26a, insbesondere der zumindest zwei Spannelemente 24a, 26a, relativ zur Abtriebswelle 14a um die als Schwenkachse ausgebildete Bewegungsachse 20a der Spanneinheit 16a. Das Befestigungselement 36a greift zu einer Befestigung des Drehmomentübertragungselements 30a, insbesondere der zumindest zwei Drehmomentübertragungselemente 30a,und/oder des Spannelements 24a, 26a, insbesondere der zumindest zwei Spannelemente 24a, 26a, zumindest in eine in der Abtriebswelle 14a angeordnete Befestigungsausnehmung der Befestigungseinheit 34a ein. Bevorzugt durchgreift das Befestigungselement 36a zu einer Befestigung des Drehmomentübertragungselements 30a, insbesondere der zumindest zwei Drehmomentübertragungselemente 30a, und/oder des Spannelements 24a, 26a, insbesondere der zumindest zwei Spannelemente 24a, 26a, zumindest durch die in der Abtriebswelle 14a angeordnete Befestigungsausnehmung der Befestigungseinheit 34a hindurch.

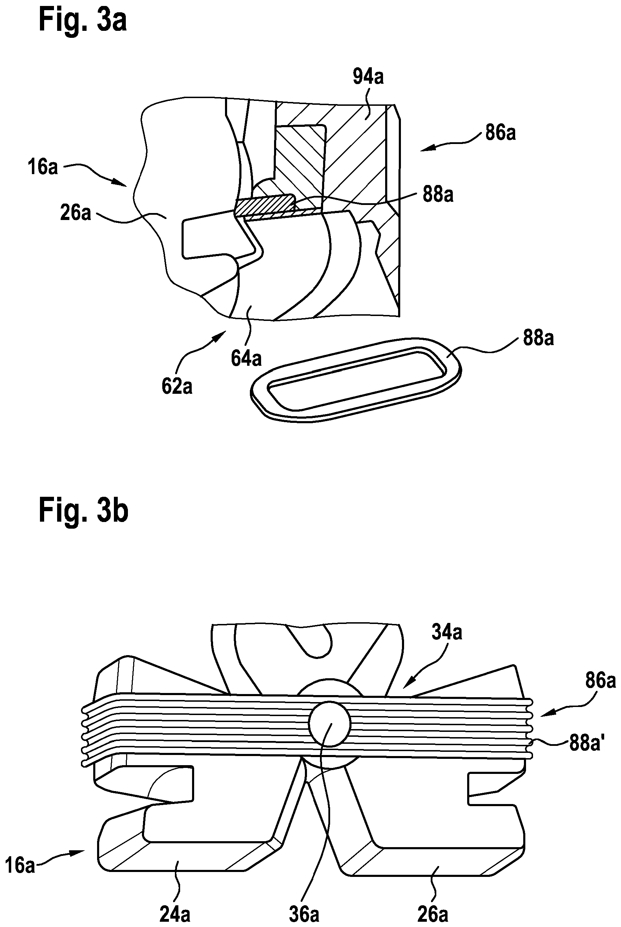

Die Schnellspannvorrichtung 10a umfasst vorzugsweise zumindest eine Dichtungseinheit 86a, die dazu vorgesehen ist, einen Spalt zwischen einem die Öffnung der Abtriebswelle 14, aus der die Spanneinheit 16a zumindest teilweise aus der Abtriebswelle 14a heraus ragt, zumindest teilweise begrenzenden Randbereich der Abtriebswelle 14a und der Spanneinheit 16a, insbesondere den zumindest zwei Spannelementen 24a, 26a, abzudichten, insbesondere zumindest gegen ein Eindringen von Schmutz (vgl. Figuren 2 und 3a). Die Dichtungseinheit 86a umfasst bevorzugt zumindest ein Dichtungselement 88a, wie beispielsweise eine Gummidichtung o. dgl., um insbesondere ein Eindringen von Schmutz in die Spanneinheit 16a, insbesondere in die Öffnung der Abtriebswelle 14a, aus der die Spanneinheit 16a zumindest teilweise aus der Abtriebswelle 14a heraus ragt, zumindest weitestgehend zu vermeiden. Das Dichtungselement 88a liegt vorzugsweise an einer Außenseite des Spannelements 24a, 26a, insbesondere der zumindest zwei Spannelemente 24a, 26a, an. Das Spannelement 24a, 26a, insbesondere die zumindest zwei Spannelemente 24a, 26a, ist/sind relativ zum Dichtungselement 88a beweglich gelagert. Das Spannelement 24a, 26a, insbesondere die zumindest zwei Spannelemente 24a, 26a, gleitet/gleiten bei einer Bewegung relativ zum Dichtungselement 88a an zumindest einer Dichtfläche des Dichtungselements 88a.

Figur 3b zeigt eine alternative Ausgestaltung eines Dichtungselements 88a' der Dichtungseinheit 86a. Das Dichtungselement 88a' ist als Kautschukdichtung ausgebildet, der an einer Außenfläche des Spannelements 24a, 26a, insbesondere der zumindest zwei Spannelemente 24a, 26a anliegt. Das Dichtungselement 88a' weist eine Aufnahmeausnehmung auf, durch die sich das Befestigungselement 36a in einem montierten Zustand erstreckt. Das Dichtungselement 88a' liegt vorzugsweise in einem montierten Zustand des Befestigungselements 36a an einer Außenseite des Befestigungselements 36a an. Das Dichtungselement 88a' weist vorzugsweise eine Vielzahl an Dichtungsrippen auf.

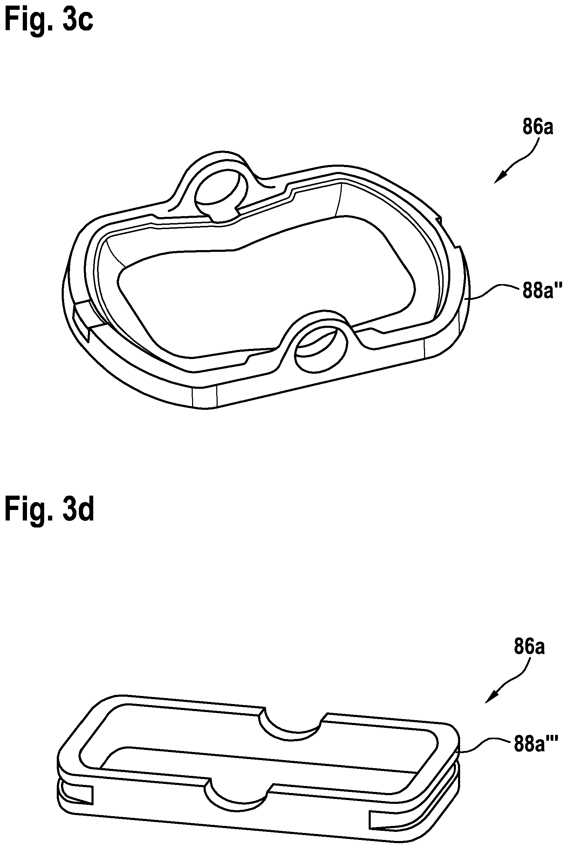

Figur 3c zeigt eine weitere alternative Ausgestaltung eines Dichtungselements 88a" der Dichtungseinheit 86a. Das Dichtungselement 88a" ist vorzugsweise als Kunststoffdichtung ausgebildet. Das Dichtungselement 88a" ist bevorzugt an ein Trägerelement der Dichtungseinheit 86a angespritzt.

Figur 3d zeigt eine weitere alternative Ausgestaltung eines Dichtungselements 88a''' der Dichtungseinheit 86a. Das Dichtungselement 88a''' ist vorzugsweise als Gummidichtung ausgebildet. Das Dichtungselement 88a''' weist vorzugsweise eine u-förmige oder eine halbkreisförmige Aufnahmeausnehmung zu einer Anordnung am Befestigungselement 36a auf.

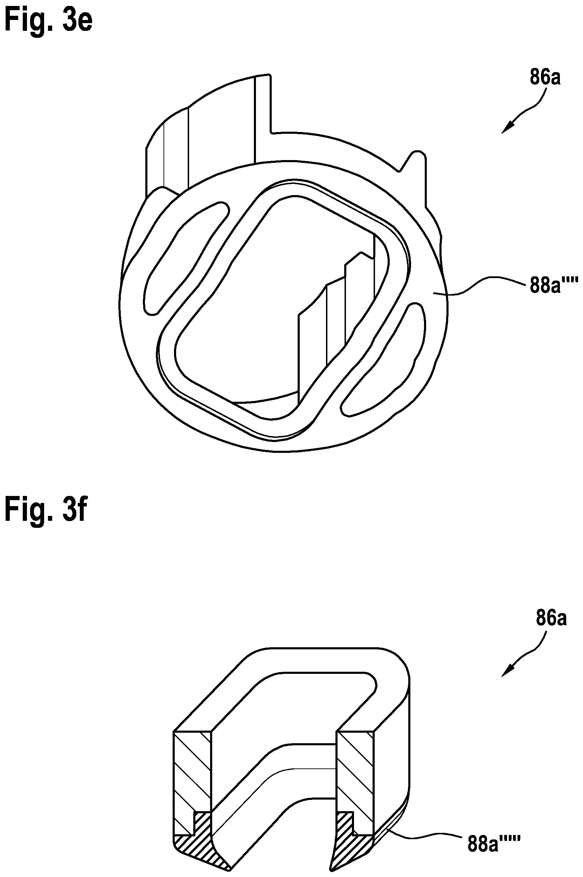

Figur 3e zeigt eine weitere alternative Ausgestaltung eines Dichtungselements 88a"" der Dichtungseinheit 86a. Das Dichtungselement 88a"" ist vorzugsweise als Zweikomponentendichtung ausgebildet. Das Dichtungselement 88a"" weist vorzugsweise zumindest eine Weichkunststoffkomponente zu einer Erfüllung einer Dichtungsfunktion und zumindest eine Hartkunststoffkomponente zu einer Erfüllung einer Stütz- und/oder Tragfunktion auf.

Figur 3f zeigt eine weitere alternative Ausgestaltung eines Dichtungselements 88a''''' der Dichtungseinheit 86a. Das Dichtungselement 88a''''' ist vorzugsweise als Zweikomponentendichtung ausgebildet. Das Dichtungselement 88a''''' weist vorzugsweise eine hohlkörperförmige Ausgestaltung auf, wobei an zumindest einer Seite eine Dichtungskomponente angeordnet ist und an einer Seite eine Stütz- und/oder Trägerkomponente.

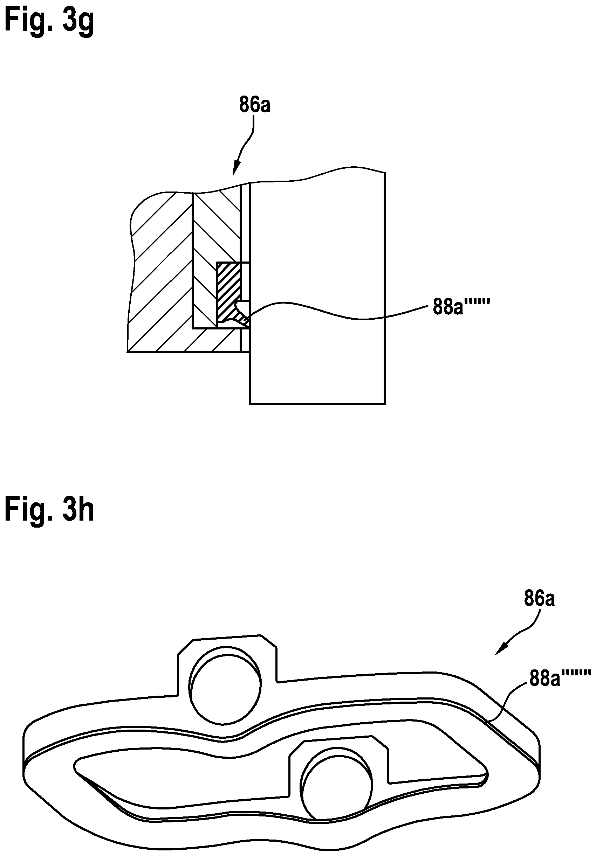

Figur 3g zeigt eine weitere alternative Ausgestaltung eines Dichtungselements 88a'''''' der Dichtungseinheit 86a. Das Dichtungselement 88a'''''' ist vorzugsweise als Zweikomponentendichtung ausgebildet. Das Dichtungselement 88a'''''' weist vorzugsweise eine hohlkörperförmige Ausgestaltung auf, wobei eine Dichtungskomponente zumindest teilweise in eine Mantelfläche einer Stütz- und/oder Trägerkomponente des Dichtungselements 88a'''''' integriert ist.

Figur 3h zeigt eine weitere alternative Ausgestaltung eines Dichtungselements 88a''''''' der Dichtungseinheit 86a. Das Dichtungselement 88a''''''' ist vorzugsweise als Gummidichtung ausgebildet. Das Dichtungselement 88a''''''' ist vorzugsweise an ein aus einem metallischen Werkstoff gebildeten Stütz- und/oder Trägerelement der Dichtungseinheit 86a angespritzt.

In Figuren 4 bis 14 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3h verwiesen werden kann. Zur Unterscheidung der Ausführungsbeispiele ist der Buchstabe a den Bezugszeichen des Ausführungsbeispiels in den Figuren 1 bis 3h nachgestellt. In den Ausführungsbeispielen der Figuren 4 bis 14 ist der Buchstabe a durch die Buchstaben b bis I ersetzt.

Figur 4 zeigt eine Detailansicht einer Befestigungseinheit 34b einer Schnellspannvorrichtung 10b. Im Unterschied zu der in den Figuren 1 und 2 dargestellten Schnellspannvorrichtung 10a weist die Befestigungseinheit 34b der Schnellspannvorrichtung 10b zumindest zwei Befestigungselemente 38b, 40b auf, die dazu vorgesehen sind, zumindest ein Drehmomentübertragungselement 30b einer Drehmomentübertragungseinheit 28b der Schnellspannvorrichtung 10b mittels einer form- und/oder kraftschlüssigen Verbindung an einer Abtriebswelle 14b der Schnellspannvorrichtung 10b zu befestigen. Das Drehmomentübertragungselement 30b greift in einem an einer Spanneinheit 16b der Schnellspannvorrichtung 10b und/oder an der Abtriebswelle 14b angeordneten Zustand einer Einsatzwerkzeugeinheit 18b in eine Aufnahmeausnehmung 78b der Einsatzwerkzeugeinheit 18b ein und liegt zu einer Drehmomentübertragung an zumindest einem die Aufnahmeausnehmung 78b begrenzenden Rand der Einsatzwerkzeugeinheit 18b an. Die Befestigungselemente 38b, 40b sind vorzugsweise als Presspassungselemente ausgebildet. Die Befestigungselemente 38b, 40b sind als Fortsätze, insbesondere als konische Fortsätze, ausgebildet. Vorzugsweise weisen die Befestigungselemente 38b, 40b eine Längsachse 46b, 48b auf, die in einem an der Abtriebswelle 14b angeordneten Zustand der Befestigungselemente 38b, 40b zumindest im Wesentlichen parallel zur Rotationsachse 72b der Abtriebswelle 14b verlaufen. Die Befestigungselemente 38b, 40b sind vorzugsweise jeweils mittels einer Presspassung in einer korrespondierenden Presspassausnehmung 90b, 92b der Abtriebswelle 14b angeordnet. Bevorzugt erfolgt eine Fixierung des Drehmomentübertragungselements 30b, insbesondere der Drehmomentübertragungselemente 30b, ausschließlich mittels einer kraftschlüssigen Verbindung der Befestigungselemente 38b, 40b und der Presspassausnehmungen 90b, 92b der Abtriebswelle 14b. Es ist jedoch auch denkbar, dass die Befestigungseinheit 34b zusätzlich ein Sicherungselement (hier nicht näher dargestellt) zu einer Sicherung der Verbindung zwischen den Befestigungselementen 38b, 40b und der Abtriebswelle 14b aufweist. Die Presspassausnehmungen 90b, 92b der Abtriebswelle 14b sind vorzugsweise konisch ausgebildet. Die Befestigungselemente 38b, 40b sind bevorzugt einteilig mit einem Abdeckelement 64b einer Abdeckeinheit 62b der Schnellspannvorrichtung 10b ausgebildet. Ferner weist die Befestigungseinheit 34b zumindest ein Befestigungselement 36b zu einer Befestigung von zumindest einem Spannelement einer Spanneinheit (hier nicht näher dargestellt) der Schnellspannvorrichtung 10b auf. Das Befestigungselement 36b zu einer Befestigung des Spannelements ist bevorzugt als Bolzen ausgebildet. Hinsichtlich weiterer Merkmale und Funktionen der Schnellspannvorrichtung 10b darf auf die Beschreibung der in den Figuren 1 bis 3h dargestellten Schnellspannvorrichtung 10a verwiesen werden.

Figur 5 zeigt eine Detailansicht einer Befestigungseinheit 34c einer Schnellspannvorrichtung 10c. Im Unterschied zu der in den Figuren 1 und 2 dargestellten Schnellspannvorrichtung 10a weist die Befestigungseinheit 34c der Schnellspannvorrichtung 10c zumindest zwei Befestigungselemente 38c, 40c auf, die dazu vorgesehen sind, zumindest ein Drehmomentübertragungselement 30c, 32c, insbesondere zumindest zwei Drehmomentübertragungselemente 30c, 32c, einer Drehmomentübertragungseinheit 28c der Schnellspannvorrichtung 10c mittels einer form- und/oder kraftschlüssigen Verbindung an der Abtriebswelle 14b zu befestigen. Die Befestigungselemente 38c, 40c sind vorzugsweise als Gewindebolzen, insbesondere als Schrauben, ausgebildet. Die Befestigungseinheit 34c weist zumindest eine Formschlusskontur 96c auf, die zumindest zu einer Befestigung des Drehmomentübertragungselements 30c, 32c, insbesondere der Drehmomentübertragungselemente 30c, 32c, dazu vorgesehen ist, mit zumindest einer an einer Abtriebswelle 14c der Schnellspannvorrichtung 10c angeordneten Formschlussgegenkontur 50c zusammenzuwirken. Bevorzugt ist infolge eines Zusammenwirkens der Formschlusskontur 96c und der Formschlussgegenkontur 50c ein Drehmoment von der Abtriebswelle 14c auf das Drehmomentübertragungselement 30c, 32c übertragbar. Die Formschlussgegenkontur 50c ist vorzugsweise als Innenfläche der als Hohlspindel ausgebildeten Abtriebswelle 14c gebildet. Bevorzugt ist die Formschlusskontur 96c einteilig mit dem Drehmomentübertragungselement 30c, 32c, insbesondere mit den Drehmomentübertragungselementen 30c, 32c, und/oder mit einem Abdeckelement 64c einer Abdeckeinheit 62c der Schnellspannvorrichtung 10c, an dem das Drehmomentübertragungselement 30c, 32c, insbesondere die Drehmomentübertragungselemente 30c, 32c, vorzugsweise angeordnet ist/sind, ausgebildet. Vorzugsweise bildet die Formschlusskontur 96c eine, insbesondere entlang einer Umfangsrichtung der Abtriebswelle 14c verlaufende, Außenkontur des Drehmomentübertragungselements 30c, 32c und/oder des Abdeckelements 64c, an dem das Drehmomentübertragungselement 30c, 32c angeordnet ist. Die Formschlusskontur 96c ist vorzugsweise polygonal, elliptisch, oval o. dgl. ausgebildet, insbesondere betrachtet in einer zumindest im Wesentlichen senkrecht zu einer Rotationsachse 72c der Abtriebswelle 14c verlaufenden Ebene. Hinsichtlich weiterer Merkmale und Funktionen der Schnellspannvorrichtung 10c darf auf die Beschreibung der in den Figuren 1 bis 3h dargestellten Schnellspannvorrichtung 10a verwiesen werden.

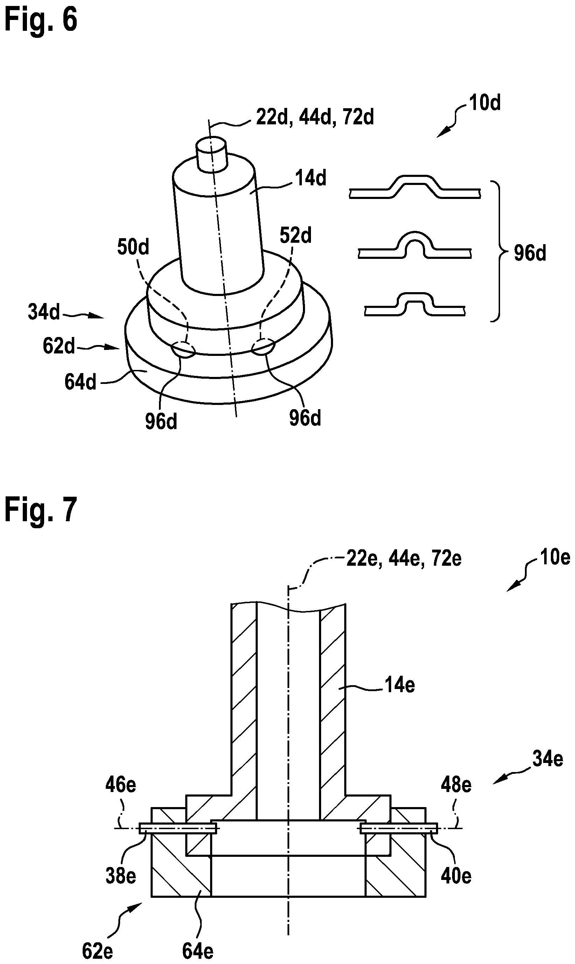

Figur 6 zeigt eine Detailansicht einer Befestigungseinheit 34d einer Schnellspannvorrichtung 10d. Im Unterschied zu der in der Figur 5 dargestellten Schnellspannvorrichtung 10c weist die Befestigungseinheit 34d der Schnellspannvorrichtung 10d zumindest eine Formschlusskontur 96d auf, die zumindest zu einer Befestigung eines Drehmomentübertragungselements (hier nicht näher dargestellt), dazu vorgesehen ist, mit zumindest einer an einer Abtriebswelle 14d der Schnellspannvorrichtung 10d angeordneten Formschlussgegenkontur 50d zusammenzuwirken. Bevorzugt ist infolge eines Zusammenwirkens der Formschlusskontur 96d und der Formschlussgegenkontur 50d ein Drehmoment von der Abtriebswelle 14d auf das Drehmomentübertragungselement übertragbar. Die Formschlusskontur 96d erstreckt sich bevorzugt entlang einer zumindest im Wesentlichen parallel zu einer Rotationsachse 72d der Abtriebswelle 14d verlaufenden Richtung, insbesondere in eine als Aufnahmeausnehmung ausgebildete und an der Abtriebswelle 14d angeordnete Formschlussgegenkontur 50d, 52d hinein. Die Formschlusskontur 96d ist vorzugsweise napfförmig ausgebildet. Die Formschlusskontur 96d kann, betrachtet in einer sich zumindest im Wesentlichen parallel zur Rotationsachse 72d der Abtriebswelle 14d erstreckenden Ebene, eine trapezförmige, eine u-förmige, eine rechteckförmige, eine viereckförmige Ausgestaltung o. dgl. aufweisen (vgl. hierzu auch Detailansichten in der Figur 6). Vorzugsweise umfasst die Befestigungseinheit 34d eine Vielzahl an Formschlusskonturen 96d, die mit mehreren an der Abtriebswelle 14d der Schnellspannvorrichtung 10d angeordneten Formschlussgegenkonturen 50d zusammenwirken. Hinsichtlich weiterer Merkmale und Funktionen der Schnellspannvorrichtung 10d darf auf die Beschreibung der in den Figuren 1 bis 3h dargestellten Schnellspannvorrichtung 10a verwiesen werden.

Figur 7 zeigt eine Detailansicht einer Befestigungseinheit 34e einer Schnellspannvorrichtung 10e. Im Unterschied zu der in den Figuren 1 und 2 dargestellten Schnellspannvorrichtung 10a weist die Befestigungseinheit 34e der Schnellspannvorrichtung 10e zumindest zwei Befestigungselemente 38e, 40e auf, die als Bolzen ausgebildet sind, die in einem Befestigungszustand eine quer, insbesondere zumindest im Wesentlichen senkrecht, zu einer Bewegungsachse 44e einer Abtriebswelle 14e der Schnellspannvorrichtung 10e verlaufende Längsachse 46e, 48e aufweist. Vorzugsweise durchgreifen die Befestigungselemente 38e, 40e zumindest ein Abdeckelement 64e einer Abdeckeinheit 62e, an dem zumindest ein Drehmomentübertragungselement (hier nicht näher dargestellt) angeordnet ist. Bevorzugt greifen die Befestigungselemente 38e, 40e zumindest teilweise eine Außenwand der Abtriebswelle 14e. Hinsichtlich weiterer Merkmale und Funktionen der Schnellspannvorrichtung 10e darf auf die Beschreibung der in den Figuren 1 bis 3h dargestellten Schnellspannvorrichtung 10a verwiesen werden.

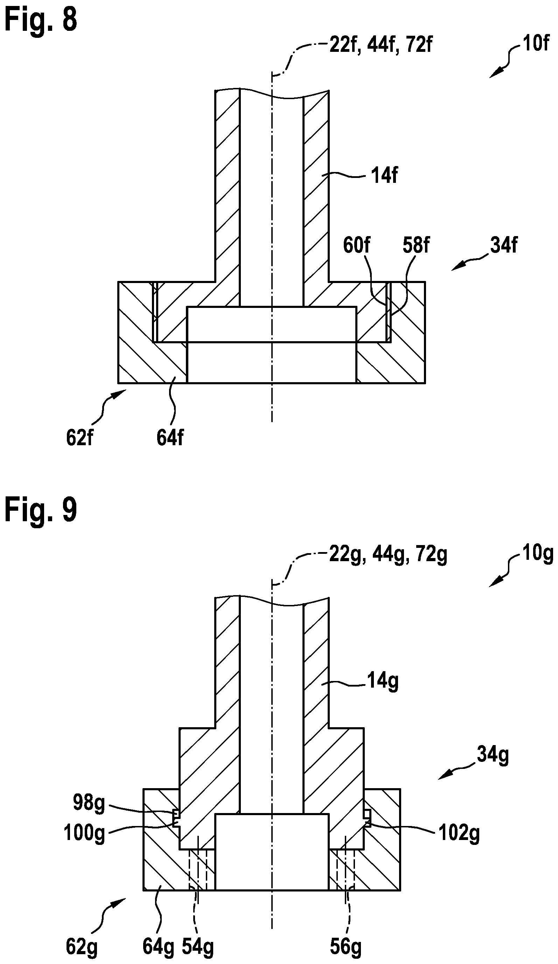

Figur 8 zeigt eine Detailansicht einer Befestigungseinheit 34f einer Schnellspannvorrichtung 10f. Im Unterschied zu der in den Figuren 1 und 2 dargestellten Schnellspannvorrichtung 10a ist die Befestigungseinheit 34f der Schnellspannvorrichtung 10f als Gewindeeinheit ausgebildet, und weist zumindest ein an dem Drehmomentübertragungselement (hier nicht näher dargestellt) und/oder ein an einem Abdeckelement 64f einer Abdeckeinheit 62f angeordnetes Gewindeelement 58f und zumindest ein an der Abtriebswelle 14f angeordnetes weiteres Gewindeelement 60f auf. Vorzugsweise ist das an dem Drehmomentübertragungselement und/oder an dem Abdeckelement 64f angeordnete Gewindeelement 58f als Innengewinde ausgebildet. Bevorzugt ist das an der Abtriebswelle 14f angeordnete weitere Gewindeelement 60f als Außengewinde ausgebildet. Es ist jedoch auch denkbar, dass das an dem Drehmomentübertragungselement und/oder an dem Abdeckelement 64f angeordnete Gewindeelement 58f als Außengewinde ausgebildet und dass das an der Abtriebswelle 14f angeordnete weitere Gewindeelement 60f als Innengewinde ausgebildet ist. Hinsichtlich weiterer Merkmale und Funktionen der Schnellspannvorrichtung 10f darf auf die Beschreibung der in den Figuren 1 bis 3h dargestellten Schnellspannvorrichtung 10a verwiesen werden.

Figur 9 zeigt eine Detailansicht einer Befestigungseinheit 34g einer Schnellspannvorrichtung 10g. Im Unterschied zu der in den Figuren 1 und 2 dargestellten Schnellspannvorrichtung 10a ist die Befestigungseinheit 34g der Schnellspannvorrichtung 10g als Schnellverschlusseinheit, insbesondere als Bajonettverschlusseinheit, ausgebildet. Vorzugsweise ist eine Kulisse 98g der Befestigungseinheit 34g an einem Drehmomentübertragungselement einer Drehmomentübertragungseinheit (hier nicht näher dargestellt) der Schnellspannvorrichtung 10g und/oder an einem Abdeckelement 64g einer Abdeckeinheit 62g der Schnellspannvorrichtung 10g, an dem das Drehmomentübertragungselement angeordnet ist, angeordnet. Zumindest ein Kulisseneingriffselement 100g, 102g der Befestigungseinheit 34g ist vorzugsweise an einer Abtriebswelle 14g der Schnellspannvorrichtung 10g angeordnet. Es ist jedoch auch denkbar, dass die Kulisse 98g an der Abtriebswelle 14g angeordnet ist und dass das zumindest eine Kulisseneingriffselement 100g, 102g an dem Drehmomentübertragungselement und/oder an dem Abdeckelement 64g angeordnet ist. Die Befestigungseinheit 34g umfasst zumindest ein Sicherungselement 54g, 56g, insbesondere zumindest zwei Sicherungselemente 54g, 56g, das/die dazu vorgesehen ist, eine Verbindung des Drehmomentübertragungselements und/oder des Abdeckelements 64g der Abdeckeinheit 62g der Schnellspannvorrichtung 10g zu sichern. Das Sicherungselement 54g, 56g, insbesondere die Sicherungselemente 54g, 56g, ist/sind vorzugsweise als Gewindebolzen, insbesondere als Schraube/n ausgebildet. Die Befestigungseinheit 34g umfasst bevorzugt zumindest das Sicherungselement 54g, 56g, insbesondere die zumindest zwei Sicherungselemente 54g, 56g, das/die dazu vorgesehen ist, eine Verbindung des Drehmomentübertragungselements mittels des als Kulisse 98g oder Kulisseneingriffselement 100g, 102g ausgebildeten Befestigungselements zu sichern. Hinsichtlich weiterer Merkmale und Funktionen der Schnellspannvorrichtung 10g darf auf die Beschreibung der in den Figuren 1 bis 3h dargestellten Schnellspannvorrichtung 10a verwiesen werden.

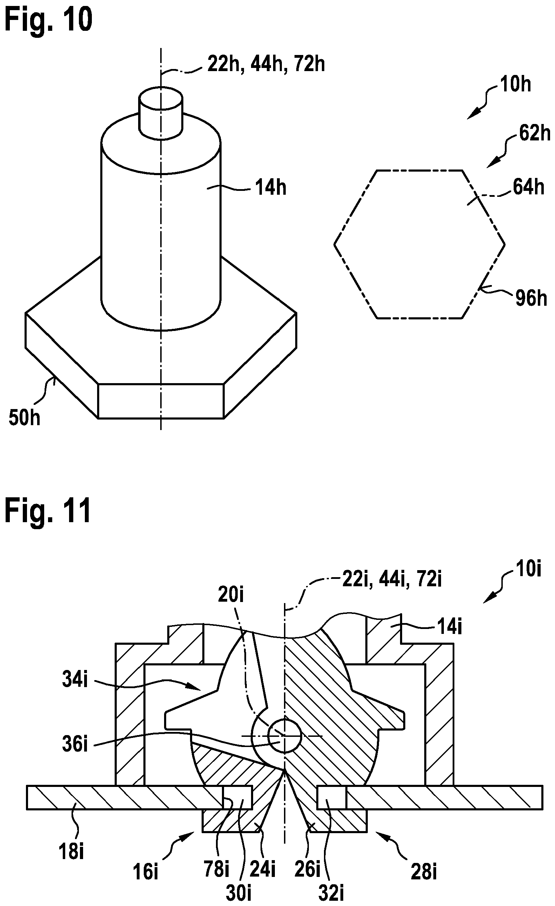

Figur 10 zeigt eine Detailansicht einer Befestigungseinheit 34h einer Schnellspannvorrichtung 10h. Im Unterschied zu der in den Figuren 1 und 2 dargestellten Schnellspannvorrichtung 10a weist die Befestigungseinheit 34h der Schnellspannvorrichtung 10h zumindest eine Formschlusskontur 96h auf, die zumindest zu einer Befestigung eines Drehmomentübertragungselements (hier nicht näher dargestellt), dazu vorgesehen ist, mit zumindest einer an einer Abtriebswelle 14h der Schnellspannvorrichtung 10h angeordneten Formschlussgegenkontur 50h zusammenzuwirken. Bevorzugt ist infolge eines Zusammenwirkens der Formschlusskontur 96h und der Formschlussgegenkontur 50h ein Drehmoment von der Abtriebswelle 14h auf das Drehmomentübertragungselement übertragbar. Die Formschlusskontur 96h erstreckt sich bevorzugt in einer sich zumindest im Wesentlichen senkrecht zu einer Rotationsachse 72h der Abtriebswelle 14h erstreckenden Ebene. Bevorzugt bildet die Formschlusskontur 96h einen Außenumfang eines Abdeckelements 64h einer Abdeckeinheit 62h der Schnellspannvorrichtung 10h. Die Formschlussgegenkontur 50h ist vorzugsweise von einer Innenfläche der Abtriebswelle 14h gebildet. Hinsichtlich weiterer Merkmale und Funktionen der Schnellspannvorrichtung 10h darf auf die Beschreibung der in den Figuren 1 bis 3h dargestellten Schnellspannvorrichtung 10a verwiesen werden. Bevorzugt umfasst die Befestigungseinheit 34h zusätzlich zumindest ein Befestigungselement (hier nicht näher dargestellt), das vorzugsweise als Gewindebolzen, insbesondere als Schraube, ausgebildet ist. Hinsichtlich weiterer Merkmale und Funktionen der Schnellspannvorrichtung 10h darf auf die Beschreibung der in den Figuren 1 bis 3h dargestellten Schnellspannvorrichtung 10a verwiesen werden.

Figur 11 zeigt eine Detailansicht einer Befestigungseinheit 34i einer Schnellspannvorrichtung 10i. Im Unterschied zu der in den Figuren 1 und 2 dargestellten Schnellspannvorrichtung 10a weist die Schnellspannvorrichtung 10i eine Drehmomentübertragungseinheit 28i auf, die zumindest zwei Drehmomentübertragungselemente 30i, 32i umfasst, die einteilig mit Spannelementen 24i, 26i einer Spanneinheit 16i der Schnellspannvorrichtung 10i ausgebildet sind. Die Schnellspannvorrichtung 10i umfasst zumindest eine Befestigungseinheit 34i zumindest zu einer, insbesondere drehfesten, Befestigung der Drehmomentübertragungselemente 30i, 32i an der Abtriebswelle 14i. Die Befestigungseinheit 34i weist zumindest ein als Bolzen, insbesondere als Lagerelement, ausgebildetes Befestigungselement 36i auf, das dazu vorgesehen ist, die Drehmomentübertragungselemente 30i, 32i mittels einer form- und/oder kraftschlüssigen Verbindung an der Abtriebswelle 14i zu befestigen, insbesondere über die Spannelemente 24i, 26i. Hinsichtlich weiterer Merkmale und Funktionen der Schnellspannvorrichtung 10i darf auf die Beschreibung der in den Figuren 1 bis 3h dargestellten Schnellspannvorrichtung 10a verwiesen werden.

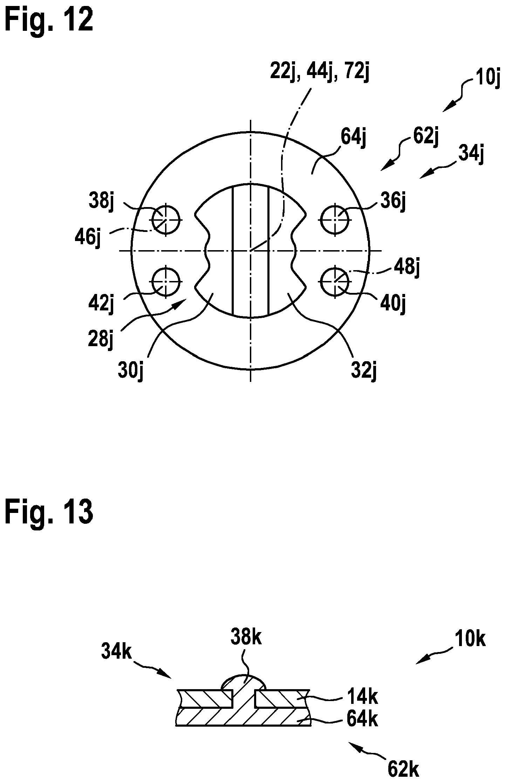

Figur 12 zeigt eine Detailansicht einer Befestigungseinheit 34j einer Schnellspannvorrichtung 10j. Im Unterschied zu der in den Figuren 1 und 2 dargestellten Schnellspannvorrichtung 10a weist die Befestigungseinheit 34j zumindest mehr als zwei, insbesondere zumindest vier, Befestigungselemente 36j, 38j, 40j, 42j auf, die dazu vorgesehen sind, ein Drehmomentübertragungselement 30j, 32j, insbesondere zumindest zwei Drehmomentübertragungselemente 30j, 32j, mittels einer form- und/oder kraftschlüssigen Verbindung an der Abtriebswelle 14j zu befestigen. Die Befestigungselemente 36j, 38j, 40j, 42j sind vorzugsweise als Gewindebolzen, insbesondere als Schrauben, ausgebildet. Hinsichtlich weiterer Merkmale und Funktionen der Schnellspannvorrichtung 10j darf auf die Beschreibung der in den Figuren 1 bis 3h dargestellten Schnellspannvorrichtung 10a verwiesen werden.

Figur 13 zeigt eine Detailansicht einer Befestigungseinheit 34k einer Schnellspannvorrichtung 10k. Im Unterschied zu der in den Figuren 1 und 2 dargestellten Schnellspannvorrichtung 10a weist die Befestigungseinheit 34k zumindest ein Befestigungselement 38k auf, das als Nietelement ausgebildet ist. Vorzugsweise erstreckt sich das als Nietelement ausgebildete Befestigungselement 38k zu einer Befestigung eines Drehmomentübertragungselements einer Drehmomentübertragungseinheit (hier nicht näher dargestellt) der Schnellspannvorrichtung 10k an einer Abtriebswelle 14k der Schnellspannvorrichtung 10k durch das Drehmomentübertragungselement und/oder durch ein Abdeckelement 64k einer Abdeckeinheit 62k der Schnellspannvorrichtung 10k, an dem das Drehmomentübertragungselement angeordnet ist, sowie durch zumindest einen Teilbereich der Abtriebswelle 14k. Es ist auch denkbar, dass das als Nietelement ausgebildete Befestigungselement 38k zumindest teilweise einteilig mit der Abtriebswelle 14k ausgebildet ist und sich durch das Drehmomentübertragungselement und/oder durch das Abdeckelement 64k, an dem das Drehmomentübertragungselement angeordnet ist, hindurch erstreckt, oder dass das als Nietelement ausgebildete Befestigungselement 38k zumindest teilweise einteilig mit dem Drehmomentübertragungselement und/oder mit dem Abdeckelement 64k, an dem das Drehmomentübertragungselement angeordnet ist, ausgebildet ist und sich zumindest durch einen Teilbereich der Abtriebswelle 14k hindurch erstreckt. Hinsichtlich weiterer Merkmale und Funktionen der Schnellspannvorrichtung 10k darf auf die Beschreibung der in den Figuren 1 bis 3h dargestellten Schnellspannvorrichtung 10a verwiesen werden.

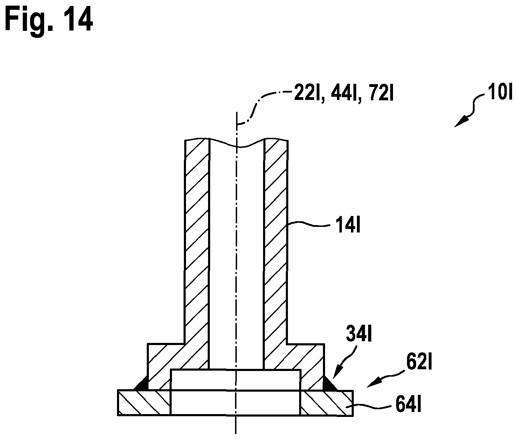

Figur 14 zeigt eine Detailansicht einer Befestigungseinheit 34l einer Schnellspannvorrichtung 10l. Im Unterschied zu der in den Figuren 1 und 2 dargestellten Schnellspannvorrichtung 10a ist die Befestigungseinheit 34l dazu vorgesehen, ein Drehmomentübertragungselement (hier nicht näher dargestellt) und/oder ein Abdeckelement 64l einer Abdeckeinheit 62l der Schnellspannvorrichtung 10l, an dem das Drehmomentübertragungselement angeordnet ist, stoffschlüssig an einer Abtriebswelle 14l zu befestigen, insbesondere mittels einer Schweißverbindung der Befestigungseinheit 34l. Vorzugsweise ist die Befestigungseinheit 34l als Schweißverbindungseinheit ausgebildet. Hinsichtlich weiterer Merkmale und Funktionen der Schnellspannvorrichtung 10l darf auf die Beschreibung der in den Figuren 1 bis 3h dargestellten Schnellspannvorrichtung 10a verwiesen werden.

## Patentansprüche

1. Schnellspannvorrichtung für eine tragbare Werkzeugmaschine, insbesondere für eine Winkelschleifmaschine, mit zumindest einer, insbesondere rotierend antreibbaren, Abtriebswelle (14, 14i), mit zumindest einer zumindest teilweise in der Abtriebswelle (14, 14i) angeordneten Spanneinheit (16, 16i), die zu einer werkzeuglosen Fixierung einer Einsatzwerkzeugeinheit (18) an der Abtriebswelle (14, 14i) zumindest ein zumindest um und/oder entlang einer Bewegungsachse (20, 22) der Spanneinheit (16, 16i) beweglich gelagertes Spannelement (24, 24i, 26, 26i) aufweist, und mit zumindest einer Drehmomentübertragungseinheit (28, 28i) zu einer Übertragung eines Drehmoments auf die Einsatzwerkzeugeinheit (18) in einem an der Abtriebswelle (14, 14i) angeordneten Zustand der Einsatzwerkzeugeinheit (18), die zumindest ein, insbesondere separat zur Abtriebswelle (14, 14i) ausgebildetes, Drehmomentübertragungselement (30, 30i, 32, 32i) aufweist, wobei zumindest eine Befestigungseinheit (34, 34i) zumindest zu einer, insbesondere drehfesten, Befestigung des Drehmomentübertragungselements (30, 30i, 32, 32i) an der Abtriebswelle (14, 14i), **dadurch gekennzeichnet, dass** die Schnellspannvorrichtung (10a, 10i) zumindest eine Dichtungseinheit (86, 86a) umfasst, die dazu vorgesehen ist, einen Spalt zwischen einem die Öffnung der Abtriebswelle (14, 14i), aus der die Spanneinheit (16, 16i) zumindest teilweise aus der Abtriebswelle (14, 14i) heraus ragt, zumindest teilweise begrenzenden Randbereich der Abtriebswelle (14, 14i) und der Spanneinheit (16, 16i), insbesondere den zumindest zwei Spannelementen (24, 24i, 26, 26i), abzudichten.

2. Schnellspannvorrichtunq nach Anspruch 1, **dadurch gekennzeichnet, dass** die Dichtungseinheit (86a) ein als eine Gummidichtung, insbesondere eine Kunststoffdichtung oder eine Kautschuckdichtung, ausgebildetes Dichtunaselement (88a, 88a', 88a'''') umfasst.

3. Schnellspannvorrichtung nach Anspruch 2, **dadurch gekennzeichnet, dass** das Dichtungselement (88a') eine Vielzahl an Dichtungsrippen aufweist.

4. Schnellspannvorrichtung nach einem der Ansprüche 2 oder 3, **dadurch gekennzeichnet, dass** das Dichtungselement (88a"") als Zweikomponentendichtung ausgebildet ist und vorzugsweise zumindest eine Weichkunststoffkomponente zu einer Erfüllung einer Dichtungsfunktion und zumindest eine Hartkunststoffkomponente zu einer Erfüllung einer Stütz- und/oder Tragfunktion aufweist.

5. Schnellspannvorrichtung nach einem der vorhergehenden Ansprüche, **dadurch gekennzeichnet, dass** eine Drehmomentübertragungseinheit (28i) zumindest zwei Drehmomentübertragungselemente (30i, 32i) umfasst. die einteilig mit Spannelementen (24i, 26i) der Spanneinheit (16i) der Schnellspannvorrichtung (10i) ausgebildet sind.

6. Schnellspannvorrichtung nach einem der vorhergehenden Ansprüche, **dadurch gekennzeichnet, dass** die Befestigungseinheit (34i) zumindest ein als Bolzen, insbesondere als Lagerelement, ausgebildetes Befestigungselement (36i) aufweist, das dazu vorgesehen ist, die Drehmomentübertragungselemente (30i, 32i) mittels einer form- und/oder kraftschlüssigen Verbindung an der Abtriebswelle (14i) zu befestigen.

7. Schnellspannvorrichtung nach Anspruch 1, **dadurch gekennzeichnet, dass** die Befestigungseinheit (34) zumindest ein Befestigungselement (36, 38, 40, 42) aufweist, das dazu vorgesehen ist, das Drehmomentübertragungselement (30, 32) mittels einer form- und/oder kraftschlüssigen Verbindung an der Abtriebswelle (14) zu befestigen.

8. Schnellspannvorrichtung nach Anspruch 7, **dadurch gekennzeichnet, dass** das Befestigungselement (36, 38, 40, 42) dazu vorgesehen ist, zusätzlich zum Drehmomentübertragungselement (30, 32) zumindest das Spannelement (24, 26) an der Abtriebswelle (14) zu befestigen.

9. Schnellspannvorrichtung nach Anspruch 7 oder 8, **dadurch gekennzeichnet, dass** das Befestigungselement (36, 38) als Bolzen ausgebildet ist, der in einem Befestigungszustand eine quer, insbesondere zumindest im Wesentlichen senkrecht, zu einer Bewegungsachse (44) der Abtriebswelle (14) verlaufende Längsachse (46, 48) aufweist.

10. Schnellspannvorrichtung zumindest nach Anspruch 7, **dadurch gekennzeichnet, dass** die Befestigungseinheit (34) zumindest eine Formschlusskontur (96) aufweist, die zumindest zu einer Befestigung des Drehmomentübertragungselements (30, 32) dazu vorgesehen ist, mit zumindest einer an der Abtriebswelle (14) angeordneten Formschlussgegenkontur (50, 52) zusammenzuwirken.

11. Schnellspannvorrichtung zumindest nach Anspruch 7 oder 9, **dadurch gekennzeichnet, dass** die Befestigungseinheit (34) zumindest ein Sicherungselement (54, 56) umfasst, das dazu vorgesehen ist, eine Verbindung des Drehmomentübertragungselements (30, 32) mittels des Befestigungselements (36, 38) zu sichern.

12. Schnellspannvorrichtung zumindest nach Anspruch 7, **dadurch gekennzeichnet, dass** die Befestigungseinheit (34) zumindest mehr als zwei Befestigungselemente (36, 38, 40, 42) aufweist, die dazu vorgesehen sind, das Drehmomentübertragungselement (30, 32) mittels einer form- und/oder kraftschlüssigen Verbindung an der Abtriebswelle (14) zu befestigen.

13. Schnellspannvorrichtung zumindest nach Anspruch 1, **dadurch gekennzeichnet, dass** die Befestigungseinheit (34) als Gewindeeinheit ausgebildet ist, und zumindest ein an dem Drehmomentübertragungselement (30, 32) angeordnetes Gewindeelement (58) und zumindest ein an der Abtriebswelle (14) angeordnetes weiteres Gewindeelement (60) aufweist.

14. Schnellspannvorrichtung zumindest nach Anspruch 1, **gekennzeichnet durch** zumindest eine Abdeckeinheit (62) zu einem zumindest teilweisen Abdecken einer Öffnung der Abtriebswelle (14), aus der die Spanneinheit (16) zumindest teilweise aus der Abtriebswelle (14) heraus ragt, wobei das Drehmomentübertragungselement (30, 32) an zumindest einem Abdeckelement (64) der Abdeckeinheit (62) befestigt ist, insbesondere einteilig mit dem Abdeckelement (64) ausgebildet ist.

15. Tragbare Werkzeugmaschine, insbesondere Winkelschleifmaschine, mit zumindest einer Schnellspannvorrichtung nach einem der vorhergehenden Ansprüche.

## Claims

1. Quick clamping device for a portable power tool, in particular for a power angle grinder, having at least one output shaft (14, 14i) that is drivable in particular in rotation, having at least one clamping unit (16, 16i) that is arranged at least partly in the output shaft (14, 14i) and has at least one clamping element (24, 24i, 26, 26i) mounted so as to be movable at least about and/or along a movement axis (20, 22) of the clamping unit (16, 16i), in order to fix an application tool unit (18) to the output shaft (14, 14i) without the use of tools, and having at least one torque transmission unit (28, 28i) for transmitting a torque to the application tool unit (18) in a state of the application tool unit (18) in which the latter is arranged on the output shaft (14, 14i), which has at least one torque transmission element (30, 30i, 32, 32i), in particular formed separately from the output shaft (14, 14i), wherein at least one fastening unit (34, 34i), at least for fastening the torque transmission element (30, 30i, 32, 32i) to the output shaft (14, 14i), in particular in a rotationally fixed manner, **characterized in that** the quick clamping device (10a, 10i) comprises at least one sealing unit (86, 86a), which is provided to seal a gap between an edge region of the output shaft (14, 14i), said edge region at least partly delimiting the opening of the output shaft (14, 14i), out of which the clamping unit (16, 16i) projects at least partly out of the output shaft (14, 14i), and the clamping unit (16, 16i), in particular the at least two clamping elements (24, 24i, 26, 26i).

2. Quick clamping device according to Claim 1, **characterized in that** the sealing unit (86a) comprises a sealing element (88a, 88a', 88a'''') in the form of a rubber seal, in particular a plastic seal or a caoutchouc seal.

3. Quick clamping device according to Claim 2, **characterized in that** the sealing element (88a') has a multiplicity of sealing ribs.

4. Quick clamping device according to either of Claims 2 and 3, **characterized in that** the sealing element (88'''') is in the form of a two-component seal and has preferably at least one soft plastic component for fulfilling a sealing function and at least one hard plastic component for fulfilling a supporting and/or load-bearing function.

5. Quick clamping device according to one of the preceding claims, **characterized in that** a torque-transmission unit (28i) comprises at least two torque-transmission elements (30i, 32i) which are formed in one piece with clamping elements (24i, 26i) of the clamping unit (16i) of the quick clamping device (10i).

6. Quick clamping device according to one of the preceding claims, **characterized in that** the fastening unit (34i) has at least one fastening element (36i), in the form of a bolt, in particular in the form of a bearing element, that is intended to fasten the torque transmission elements (30i, 32i) to the output shaft (14i) by means of a form- and/or force-fitting connection.

7. Quick clamping device according to Claim 1, **characterized in that** the fastening unit (34) has at least one fastening element (36, 38, 40, 42) that is intended to fasten the torque transmission element (30, 32) to the output shaft (14) by means of a form- and/or force-fitting connection.

8. Quick clamping device according to Claim 7, **characterized in that** the fastening element (36, 38, 40, 42) is intended to fasten, in addition to the torque transmission element (30, 32), at least the clamping element (24, 26) to the output shaft (14).

9. Quick clamping device according to Claim 7 or 8, **characterized in that** the fastening element (36, 38) is in the form of a bolt, which, in a fastening state, has a longitudinal axis (46, 48) extending transversely, in particular at least substantially perpendicularly, to a movement axis (44) of the output shaft (14).

10. Quick clamping device at least according to Claim 7, **characterized in that** the fastening unit (34) has at least one form-fitting contour (96), which, at least for fastening the torque transmission element (30, 32), is intended to cooperate with at least one form-fitting mating contour (50, 52) arranged on the output shaft (14) .

11. Quick clamping device at least according to Claim 7 or 9, **characterized in that** the fastening unit (34) comprises at least one securing element (54, 56), which is intended to secure a connection of the torque transmission element (30, 32) by means of the fastening element (36, 38).

12. Quick clamping device at least according to Claim 7, **characterized in that** the fastening unit (34) has at least more than two fastening elements (36, 38, 40, 42), which are intended to fasten the torque transmission element (30, 32) to the output shaft (14) by means of a form- and/or force-fitting connection.

13. Quick clamping device at least according to Claim 1, **characterized in that** the fastening unit (34) is in the form of a threaded unit, and has at least one threaded element (58) arranged on the torque transmission element (30, 32), and at least one further threaded element (60) arranged on the output shaft (14).

14. Quick clamping device at least according to Claim 1, **characterized by** at least one cover unit (62) for at least partly covering an opening of the output shaft (14), out of which the clamping unit (16) projects at least partly out of the output shaft (14), wherein the torque transmission element (30, 32) is fastened to at least one cover element (64) of the cover unit (62), in particular is formed in one piece with the cover element (64) .

15. Portable power tool, in particular power angle grinder, having at least one quick clamping device according to one of the preceding claims.

## Revendications

1. Dispositif de serrage rapide pour une machine-outil portative, en particulier pour une meuleuse d'angle, comprenant au moins un arbre de prise de force (14, 14i), en particulier pouvant être entraîné en rotation, comprenant au moins une unité de serrage (16, 16i) disposée au moins en partie dans l'arbre de prise de force (14, 14i), qui présente, en vue d'une fixation sans outil d'une unité d'outil d'insertion (18) sur l'arbre de prise de force (14, 14i), au moins un élément de serrage (24, 24i, 26, 26i) supporté de manière déplaçable au moins autour et/ou le long d'un axe de déplacement (20, 22) de l'unité de serrage (16, 16i), et comprenant au moins une unité de transfert de couple (28, 28i) en vue d'un transfert d'un couple à l'unité d'outil d'insertion (18) dans un état de l'unité d'outil d'insertion (18) disposée sur l'arbre de prise de force (14, 14i), laquelle présente au moins un élément de transfert de couple (30, 30i, 32, 32i) réalisé notamment séparément de l'arbre de prise de force (14, 14i), au moins une unité de fixation (34, 34i) au moins en vue d'une fixation notamment solidaire en rotation de l'élément de transfert de couple (30, 30i, 32, 32i) à l'arbre de prise de force (14, 14i), **caractérisé en ce que** le dispositif de serrage rapide (10a, 10i) comprend au moins une unité d'étanchéité (86, 86a) qui est prévue pour étanchéifier une fente entre une région de bord de l'arbre de prise de force (14, 14i), limitant au moins en partie l'ouverture de l'arbre de prise de force (14, 14i) depuis laquelle l'unité de serrage fait saillie au moins en partie hors de l'arbre de prise de force (14, 14i), et l'unité de serrage (16, 16i), en particulier les au moins deux éléments de serrage (24, 24i, 26, 26i).

2. Dispositif de serrage rapide selon la revendication 1, **caractérisé en ce que** l'unité d'étanchéité (86a) comporte un élément d'étanchéité (88a, 88a', 88a'''') réalisé sous la forme d'une garniture d'étanchéité en gomme, notamment une garniture d'étanchéité en matière plastique ou une garniture d'étanchéité en caoutchouc.

3. Dispositif de serrage rapide selon la revendication 2, **caractérisé en ce que** l'élément d'étanchéité (88a') possède une pluralité de nervures d'étanchéité.

4. Dispositif de serrage rapide selon l'une des revendications 2 et 3, **caractérisé en ce que** l'élément d'étanchéité (88a'''') est réalisé sous la forme d'une garniture d'étanchéité à deux composants et possède de préférence au moins un composant en matière plastique tendre destiné à remplir une fonction d'étanchéité et au moins un composant en matière plastique dure destiné à remplir une fonction d'appui et/ou porteuse.

5. Dispositif de serrage rapide selon l'une des revendications précédentes, **caractérisé en ce que** l'unité de transfert de couple (28i) comporte au moins deux éléments de transfert de couple (30i, 32i) qui sont formés d'une seule pièce avec des éléments de serrage (24i, 26i) de l'unité de serrage (16i) du dispositif de serrage rapide (10i).

6. Dispositif de serrage rapide selon l'une des revendications précédentes, **caractérisé en ce que** l'unité de fixation (34i) possède au moins un élément de fixation (36i) réalisé sous la forme d'un boulon, notamment sous la forme d'un élément formant palier, qui est prévu pour fixer les éléments de transfert de couple (30i, 32i) à l'arbre de prise de force (14i) au moyen d'une liaison par complémentarité de formes et/ou par assemblage de force.

7. Dispositif de serrage rapide selon la revendication 1, **caractérisé en ce que** l'unité de fixation (34) possède au moins un élément de fixation (36, 38, 40, 42) qui est prévu pour fixer l'élément de transfert de couple (30, 32) à l'arbre de prise de force (14) au moyen d'une liaison par complémentarité de formes et/ou par assemblage de force.

8. Dispositif de serrage rapide selon la revendication 7, **caractérisé en ce que** l'élément de fixation (36, 38, 40, 42) est prévu pour fixer en plus de l'élément de transfert de couple (30, 32) au moins l'élément de serrage (24, 26) à l'arbre de prise de force (14).

9. Dispositif de serrage rapide selon la revendication 7 ou 8, **caractérisé en ce que** l'élément de fixation (36, 38) est réalisé sous forme de boulon qui présente, dans un état de fixation, un axe longitudinal (46, 48) s'étendant transversalement, en particulier au moins essentiellement perpendiculairement, à un axe de déplacement (44) de l'arbre de prise de force (14).

10. Dispositif de serrage rapide au moins selon la revendication 7, **caractérisé en ce que** l'unité de fixation (34) présente au moins un contour d'engagement par complémentarité de formes (96) qui est prévu au moins pour une fixation de l'élément de transfert de couple (30, 32) de manière à coopérer avec au moins un contour conjugué d'engagement par complémentarité de formes (50, 52) disposé au niveau de l'arbre de prise de force (14).

11. Dispositif de serrage rapide au moins selon la revendication 7 ou 9, **caractérisé en ce que** l'unité de fixation (34) comprend au moins un élément de fixation (54, 56) qui est prévu pour fixer une connexion de l'élément de transfert de couple (30, 32) au moyen de l'élément de fixation (36, 38).

12. Dispositif de serrage rapide au moins selon la revendication 7, **caractérisé en ce que** l'unité de fixation (34) présente au moins plus de deux éléments de fixation (36, 38, 40, 42) qui sont prévus pour fixer l'élément de transfert de couple (30, 32) à l'arbre de prise de force (14) au moyen d'une liaison par complémentarité de formes et/ou par assemblage de force.

13. Dispositif de serrage rapide au moins selon la revendication 1, **caractérisé en ce que** l'unité de fixation (34) est réalisée sous forme d'unité filetée, et présente au moins un élément fileté (58) disposé au niveau de l'élément de transfert de couple (30, 32) et au moins un élément fileté (60) supplémentaire disposé au niveau de l'arbre de prise de force (14).

14. Dispositif de serrage rapide au moins selon la revendication 1, **caractérisé par** au moins une unité de recouvrement (62) pour un recouvrement au moins partiel d'une ouverture de l'arbre de prise de force (14), depuis laquelle l'unité de serrage (16) fait saillie au moins en partie hors de l'arbre de prise de force (14), l'élément de transfert de couple (30, 32) étant fixé à au moins un élément de recouvrement (64) de l'unité de recouvrement (62), notamment étant réalisé d'une seule pièce avec l'élément de recouvrement (64).

15. Machine-outil portative, en particulier meuleuse d'angle, comprenant au moins un dispositif de serrage rapide selon l'une des revendications précédentes.
